# EUROPEAN PATENT SPECIFICATION

(11) **EP 0 807 244 B1**
(45) Date of publication and mention of the grant of the patent: **28.08.2002**
(21) Application number: 96905157.2
(22) Date of filing: 17.01.1996
(51) Int. Cl.: G01F 23/284

(54) **VOLUME VERIFICATION APPARATUS AND METHOD**
VOLUMENÜBERPRÜFUNGSVERFAHREN UND GERÄT
EQUIPEMENT ET PROCEDE DE VERIFICATION DE VOLUMES

(30) Priority: 02.02.1995 US 382548
(43) Date of publication of application: 19.11.1997
(73) Proprietor: Abbott Laboratories, Abbott Park, Illinois 60064-3500 (US)
(72) Inventor: VIEGUT, Todd, E., Dallas, TX 75234 (US); KOTLARIK, John, Vermon Hill, IL 60061 (US); WROBLEWSKI, Mieczyslaw, Lake Forest, IL 60045 (US); SLESZYNSKI, Neal, T., Kenosha, WI 53143 (US); FOWLER, John, Paul, Louisville, TX 75063 (US); SCHAPIRA, Thomas, Gerard, Bristol, WI 53104 (US); SMITH, Kenneth, Charles, Grand Prairie, TX 75052 (US)
(74) Representative: Modiano, Guido, Dr.-Ing.
(86) International application number: US9600611
(87) International publication number: WO96024030

(56) References cited:
- EP-A- 0 338 400
- EP-A- 0 426 622
- US-A- 4 107 993
- US-A- 5 275 951
- US-A- 5 351 036
- PATENT ABSTRACTS OF JAPAN vol. 010, no. 252 (C-369), 29 August 1986 & JP,A,61 078458 (SHIMADZU CORP), 22 April 1986,

## Description

### BACKGROUND OF THE INVENTION

Embodiments of the present invention generally relate to an apparatus and a method for checking or verifying a volume of a fluid. More specifically, the embodiments relate to an apparatus and a method for verifying fluid volume for use in an automated instrument.

Automated instruments are available to perform a number of tasks. One such automated instrument is an analytical instrument. An analytical instrument can perform tests, such as medical diagnostic tests, on a sample. For example, such tests may identify the AIDS virus in a blood sample or other item of interest in a biological sample.

To perform such tests, an analytical instrument may mix the biological sample with a substance, such as a reagent and the like. In some embodiments, these reagents may be fluids. The fluids may be supplied to the biological sample within the medical instrument by a fluid system. The fluid system may include a source of fluid, a pump, a dispense nozzle and a conduit fluidly connecting those elements. The source of fluid may be a container and the like. The pump moves fluid from the container toward the dispense nozzle through the conduit. The sample, which may be held in a suitable container, is positioned adjacent the dispense nozzle. When the pump is operated, fluid from the container leaves the nozzle and enters the sample container. Movement of the fluid into the container, if desired, can cause the fluid and the sample to mix.

Illustrating further by example, a given instrument may perform'a blood analysis. The instrument adds a predetermined volume of a fluid to a predetermined volume of a blood sample. The fluid reacts with the blood sample. Because of the reaction between the sample and the fluid, an electromagnetic or chemi-optical signal or light is sent from the mixture of sample and fluid. A detector in the instrument sees or reads the light sent from the mixture. Appropriate elements of the instrument, such as a computer and the like, interpret the information obtained by the detector and provide an operator with information about the blood sample.

In order for this instrument to perform as intended and to give accurate results, it is desirable that a specific, predetermined amount or volume of fluid be mixed with the sample. If too much or too little fluid were added to the sample, the light sent from the mixture may be different from the proper light sent from the mixture when the predetermined volume of fluid is added. The different light sent from the mixture is interpreted by the computer in the same way as the proper light. Therefore, the computer may give inaccurate information to the operator of the instrument.

The possibility of inaccurate information being given by an instrument is a concern. For example, the test performed may be to see if a unit of blood were infected with the AIDS virus. Assuming that the blood is infected with the AIDS virus, adding too little or too much fluid to the blood sample may result in the instrument telling the operator that the unit of blood is not infected with the AIDS virus. Accordingly, it can be appreciated that it is desirable to have an apparatus connectable with the instrument for checking elements of a fluid system and for verifying that the proper, predetermined amount of fluid has left the dispense nozzle and entered the container during operation of the analytical instrument.

An apparatus according to the precharacterizing portion of claim 1 is known from EP-A-338 400.

### SUMMARY OF THE INVENTION

Embodiments disclosed herein provide apparatus and methods for verifying a volume of fluid. According to the invention an apparatus includes a receptacle for containing fluid, a first conductor operatively associated with the receptacle and a second conductor operatively associated with the receptacle offset from the first conductor. A source of a first electrical signal is electrically connected with the first conductor. A monitor is electrically connected with the second conductor for detecting a second electrical signal created in the second conductor. A liner is removably connectable with the receptacle.

A method for operating the above apparatus includes positioning the receptacle adjacent a fluid dispense nozzle such that fluid dispensed from the nozzle enters the receptacle. The first electrical signal is applied to the first conductor operatively connected with the receptacle. The second electrical signal created in the second conductor operatively connected with the receptacle responsive to the first electrical signal is monitored.

A further method for operating the foregoing apparatus method comprises placing a volume of fluid within the receptacle. The first conductor is positioned adjacent the receptacle such that the first conductor does not contact the volume of fluid. The second conductor is positioned adjacent the receptacle such that the second conductor does not contact the volume of fluid or the first conductor. The first electrical signal is applied to the first conductor. The second electrical signal generated in the second conductor responsive to the first electrical signal is monitored to verify the volume of the fluid in the receptacle.

In an additional embodiment, the first conductor is operatively associated with the receptacle such that the first conductor does not contact the volumé of the fluid. The second conductor is operatively associated with the receptacle offset from the first conductor such that the first conductor does not contact the volume of the fluid.

### BRIEF DESCRIPTION OF THE DRAWINGS

Fig. 1 is a block diagram view of a volume verification apparatus disclosed herein;
Fig. 2 is an enlarged plan view of a portion of the apparatus of Fig. 1;
Fig. 3 is a sectional view, along line 3-3 of Fig. 2;
Fig. 4 is an enlarged sectional view of a portion of the apparatus shown in Figs. 2 and 3;
Fig. 5 is a plan view of an element of the apparatus shown in Fig. 4;
Fig. 6 is a side elevational view of a portion of the element shown in Fig. 5;
Fig. 7 is a block schematic diagram of a portion of the apparatus of Fig. 1;
Fig. 8 is a generic block diagram of a portion of the apparatus of Fig. 1;
Figs. 9A and 9B are schematic diagrams of elements of the portion illustrated in Fig. 7;
Fig. 10 is a schematic diagram of elements of the portion illustrated in Fig. 7;
Fig. 11 is a schematic diagram of elements of the portion illustrated in Fig. 7; and
Fig. 12 is a schematic diagram of elements of the portion illustrated in Fig. 7.

### DETAILED DESCRIPTION OF PREFERRED EMBODIMENTS

The embodiments disclosed herein relate to an apparatus and a method for verifying a volume of fluid. The embodiments may be used with any desired fluid with suitable modifications to provide compatibility with the desired fluid, e.g. non-reactivity. The embodiments may be utilized in any suitable employment. For the sake of clarity, the embodiments are discussed with respect to their employment with an analytical instrument. The analytical instrument may be substantially similar to those disclosed in U.S. Patent No.'s 5,006,309, 5,015,157, 5,089,424, 5,120,199, Des. 332,834, 5,185,264, 5,198,368, 5,232,669, 5,244,630, 5,246,354, 5,283,178, 5,299,446 and 5,151,518. Those patents are assigned to the assignee of the present invention and the disclosures thereof are incorporated herein by reference. It is to be noted that the embodiments disclosed herein may be modified in any desirable fashion to produce still other embodiments. For instance, steps of one method may be combined, in any desired order, with steps of another method to arrive at yet another method.

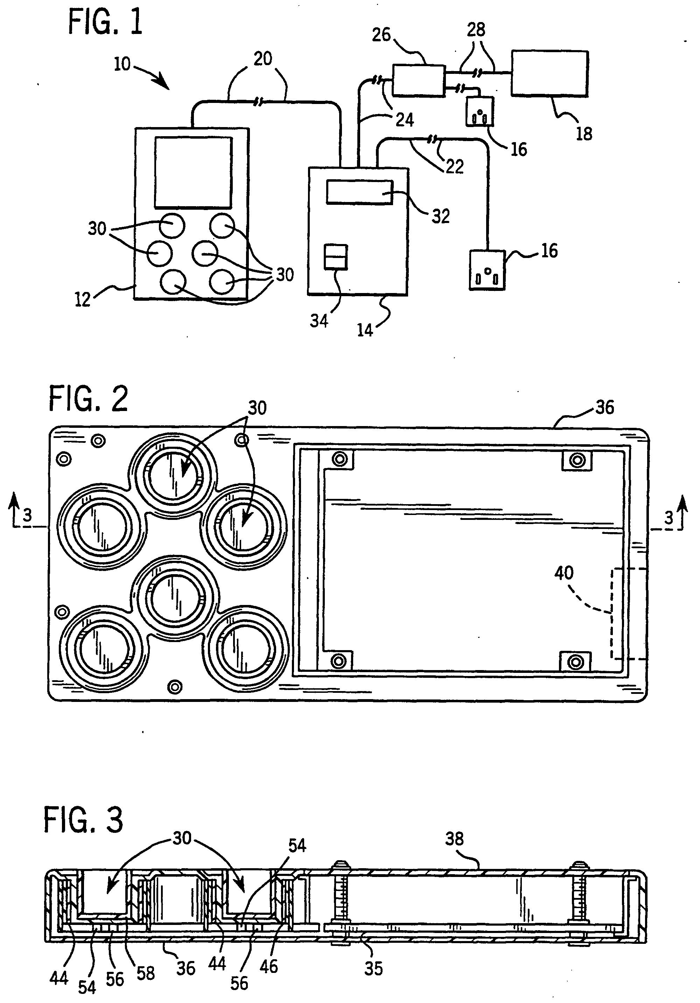

Fig. 1 illustrates a volume verification apparatus 10 which verifies a volume of a fluid, such as a reagent, a sample and the like. It is to be noted that the apparatus 10 verifies fluid volume without requiring an electrode or conductor to come into physical contact with the volume of fluid being verified. This property of the apparatus 10 is advantageous, i.e. to reduce fluid carryover and the like.

The apparatus 10 generally comprises a sensor unit 12, a feedback mechanism 14 and a source 16 of electrical energy. The sensor unit 12 is operatively connectable with an analytical instrument 18 for verifying a fluid volume associated with the analytical instrument 18. The sensor unit 12 is electrically connected with the feedback mechanism 14 by conductor 20. Conductor 22 electrically connects the feedback mechanism 14 with the source 16 of electrical energy such that the feedback mechanism 14 and the sensor unit 12 are supplied with electrical energy. In some embodiments, a conductor 24 is provided that electrically connects the feedback mechanism 14 to a computer 26. In other embodiments, a conductor 28 is provided which electrically connects the computer 26, in parallel, with the analytical instrument 18. In still further embodiments, the conductor 28 may directly electrically connect the feedback mechanism 14 with the analytical instrument 18, which may integrate the computer 26.

The sensor unit 12 includes at least one receptacle 30 for containing a volume of fluid to be verified. The sensor unit 12 may have a configuration which corresponds to a complementary configuration on the analytical instrument 18 to provide compatibility. The feedback mechanism 14 includes structures, such as a display 32 and the like, for providing an operator with feedback indicative of the volume of fluid to be verified. The feedback mechanism may also be provided with a switch 34 for selecting electrical connection between the sensor unit 12 and the source 16 of electrical energy. The computer 26 includes memory containing and running appropriate routines to control operation of the apparatus 10 and to utilize the feedback provided by the feedback mechanism 14.

Fig. 2 illustrates the sensor unit 12 in more detail. The sensor unit 12 contains at least one receptacle 30 for containing a volume'of fluid to be verified and a circuit board 35. The receptacle 30 is defined by an aperture 31 on the sensor unit 12. The number of receptacles 30, as well as their disposition is dependent upon the construction of relevant portions of the analytical instrument 18. The circuit board 35 is supported in a housing 36 by suitable structures. The circuit board 35 may be accessed from an exterior of the housing 36 through panel 38 which may be removable from the housing 36. The housing 36 also comprises a port 40 for accepting the conductor 20 thereby permitting electrical connection between the circuit board 35 and the feedback mechanism 14. In one embodiment, the housing 36 is substantially rectangular having a length of about 165,1 mm (6.5 inches), a width of about 3 inches and a height of about 22,86 mm (0.9 inches). In the illustrated embodiment, six receptacles 30 are formed in the housing 36, however, other numbers are also possible.

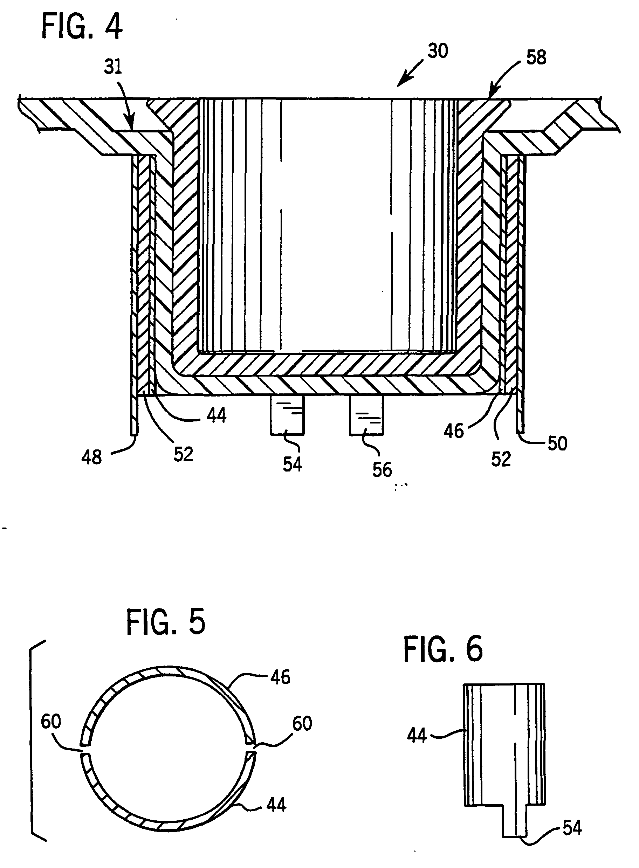

An exemplary receptacle 30, illustrated in Fig. 4, comprises a first conductor 44 and a second conductor 46 operatively associated with the aperture 31. In a exemplary embodiment, the first conductor 44 may be a transmitter while the second conductor 46 may be a receiver. The first conductor 44 and the second conductor 46 include, respectively, contacts 54 and 56 that permit electrical connections with the first conductor 44 and the second conductor 46.

The contacts 54 and 56 allow an electromagnetic signal to be sent to or from the conductors 44 and 46, respectively. The first conductor 44 and the second conductor 46 are electromagnetically coupled such that electromagnetic signal transmission between the first conductor 44 and the second conductor 46 depends upon a substance, such as a volume of fluid and the like, operatively disposed between the first conductor 44 and the second conductor 46. By appropriately consulting electromagnetic signal transmission between the conductors 44 and 46, an operator can determine or verify a volume of fluid contained within the receptacle 30, i.e. the volume of fluid dispensed by the analytical instrument 18.

An exemplary construction of the conductors 44 and 46 is illustrated in Figs. 5 and 6. The conductors 44 and 46 are formed from pieces or sheets of a suitable metal, such as copper and the like. The conductors 44 and 46 are formed or curved in a substantially semicylindrical shape. In one embodiment, the conductors 44 and 46 define a diameter of about 12,7 mm (0.5 inches) and have a height of about 12,7mm (0.5 inches) and a thickness of about 0,254mm (0.01 inches). The contacts 54 and 56 depend from the substantially semicylindrical bodies of the conductors 44 and 46. The contacts 54 and 56 are about 2,032 mm (0.08 inches) wide and about 3,175 mm (0.125 inches) long. As shown in Fig. 5, the first conductor 44 is offset from the second conductor 46 by a gap 60 measuring about 1,27 mm (0.05 inches).

Some embodiments include a third conductor 48 and a fourth conductor 50, operatively associated with the first conductor 44 and the second conductor 46, respectively, to reduce electromagnetic interference received by the first conductor 44 and the second conductor 46. In these embodiments, an insulator 52 may be disposed electrically between the first conductor 44 and the third conductor 48 and electrically between the second conductor 46 and the fourth conductor 50. In some embodiments, the third conductor 48 and the fourth conductor 50 may be integrated as a single conductor.

The aperture 31 associated with a particular receptacle 30 provides support for the conductors 44 through 50 and the insulator 52. In some embodiments, the conductors 44 through 50 and the insulator 52 may be removed from the associated aperture 31 for cleaning, replacement, etc.

According to the invention, a liner 58 is disposed within the aperture 31 at a side thereof opposite to the side thereof adjacent the conductors 44 and 46. The liner 58 may be made from a material that is compatible, e.g. non-reactive, with the fluid, a volume of which is to be verified by the apparatus 10. The liner 58 is removable for replacement, cleaning, etc. In still other embodiments, the liner 58 may be provided on an inner surface of a removable insert which is removably connectable with the aperture 31. The insert may be made of a suitable, non-electrically conducting polymer, such as Monsanto Lustran 248.

In one embodiment, the liner 58 comprises a low friction substance, such as a silicone and the like, to reduce a meniscus curvature formed by a fluid disposed within the liner 58 and thereby within the receptacle 30. In an exemplary embodiment, the liner 58 comprises a polymeric coating, such as dimethyl-hydroxyl-alkylene-oxide-methyl-siloxane (United Chemical Technologies #PS835, Bristol, PA). If a removable insert were used, then, in one embodiment, at least one insert is placed in a mixture of silicone or about 2.0 grams of dimethyl-hydroxyl-alkylene-oxide-methyl-siloxane and about 98 grams of trichlorotrifluoroethane (Baxter Scientific Products MS-80902, Sunnyvale, CA). The insert is removed from the mixture and drained. The insert is dried at about 80 degrees Celsius for about 2 hours. The insert is rinsed. Then, the insert is placed in a bath of distilled water for about 5 minutes and the insert is drained. The insert is dried again at about 80 degrees Celsius for about 2 hours. The liner 58 and/or the insert is substantially cylindrical, having an open end and a closed end, with an inner diameter of about 12,94 mm (0.51 inches), an outer diameter of about 14,98 mm (0.59 inches)and a height of about 14,22 mm (0.56 inches).

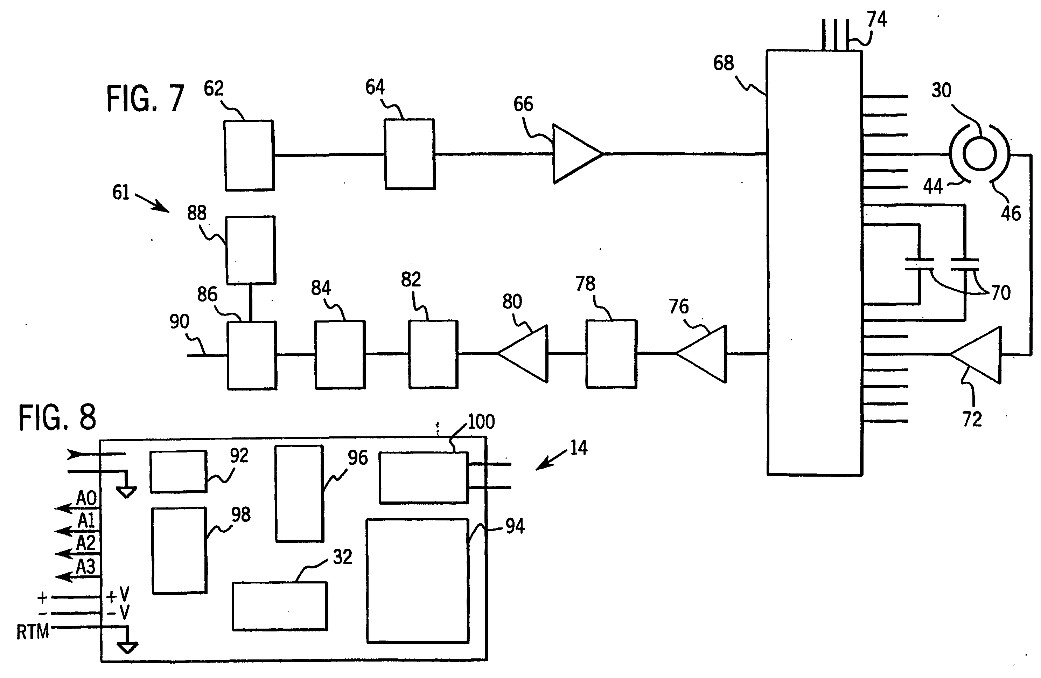

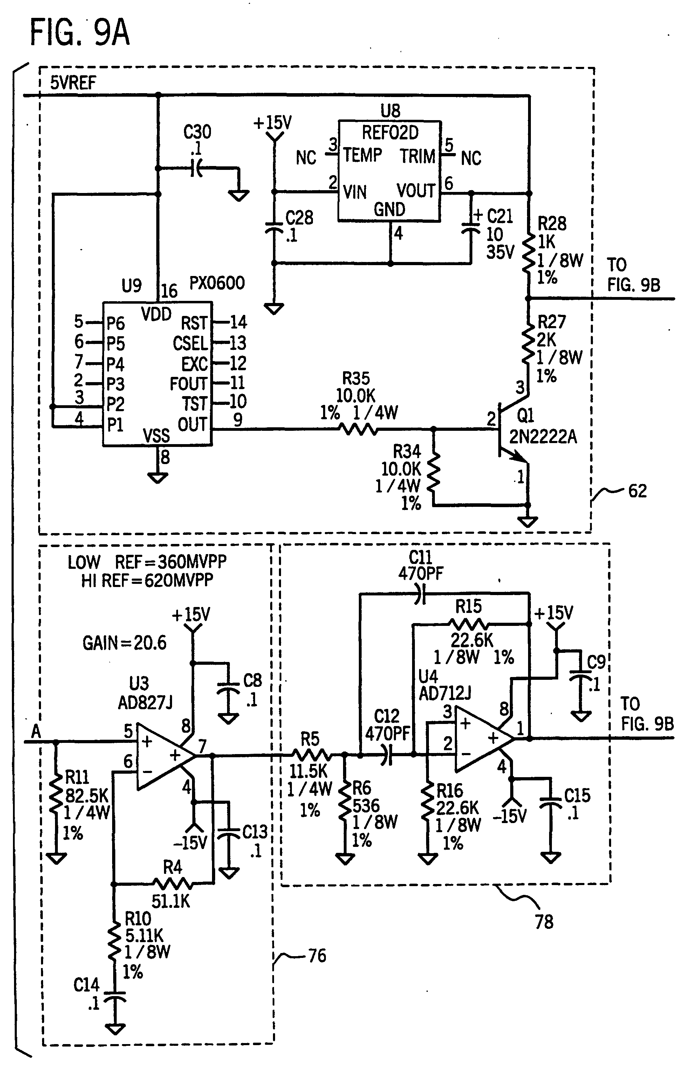

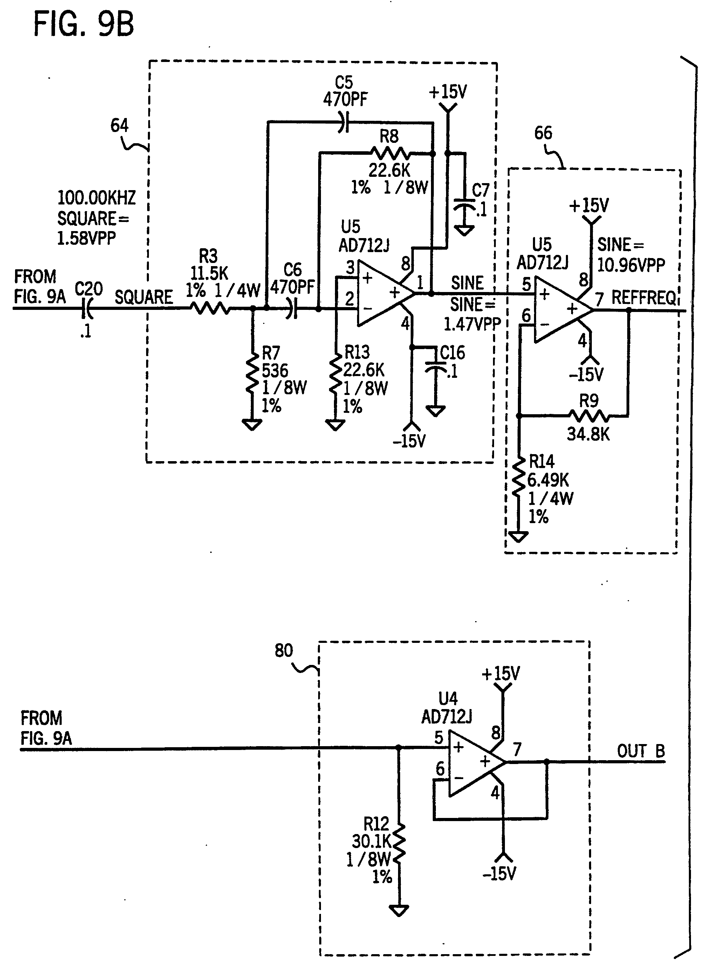

An exemplary embodiment of electronic structure or circuit 61 associated with the sensor unit 12 is illustrated generally in Fig. 7, with detailed electronic schematic diagrams presented in Figs. 8 through 12. An oscillator 62 generates a periodic electrical signal substantially in the radio frequency range. In an exemplary embodiment, the oscillator 62 generates a substantially square wave of about 1.58 Volts peak-to-peak with an approximate 3.6 Volts (DC) offset at a frequency of about 100 kHz. An exemplary embodiment of the oscillator 62 is shown in Figs. 9A and 9B.

The oscillator 62 is electrically connected to a filter 64 (bandpass) with a passband of about 60 kHz centered at about 100 kHz. The filter 64 converts the periodic signal from the oscillator 62 to an electrical signal of substantially similar frequency but of approximately sinusoidal form. The construction of the filter 64 is shown in Figs. 9A and 9B. The filter 64 is electrically connected to an amplifier 66, also shown in detail in Figs. 9A and 9B, which increases an amplitude of the electrical signal by a factor of about 7.5, yielding an approximately 11.0 Volt peak-to-peak (AC) signal of about 100 kHz.

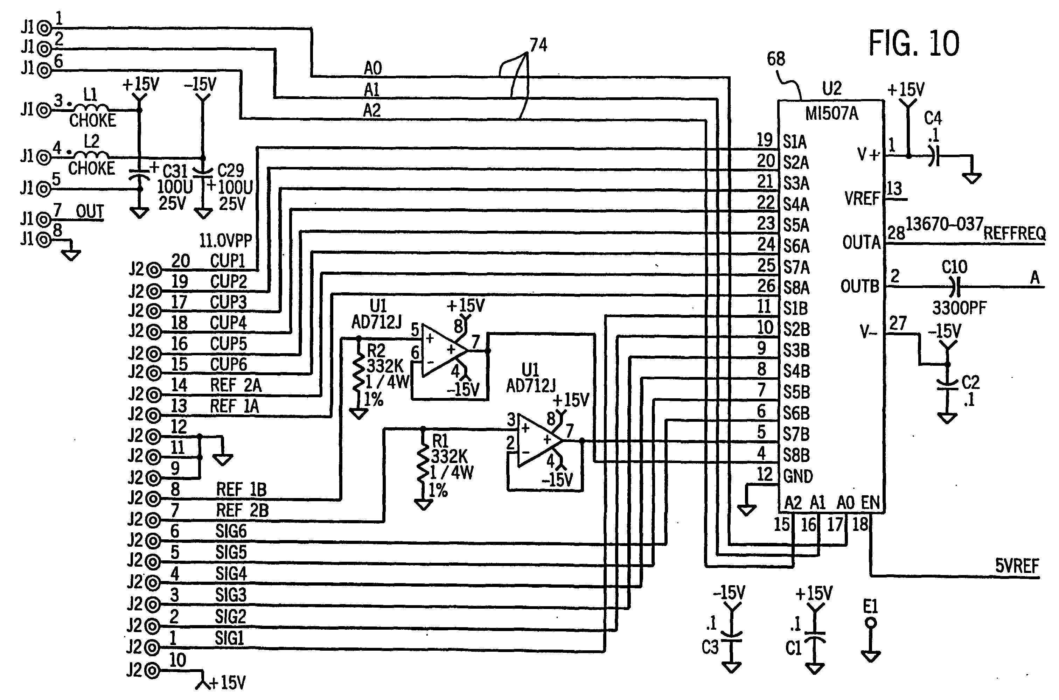

Electrical output of the amplifier 66 is electrically connected to a switch 68 (Fig. 10), such as a multiplexer and the like, which directs the signal to the conductor 44 associated with at least one receptacle 30 (Fig. 4) or to one of two reference resistor circuits 70. Electromagnetic coupling between the conductor 44 and the conductor 46, due at least in part to electrical transmissive properties of the fluid, causes an electrical signal to be received by the conductor 46. The amplitude of the electrical signal received by the conductor 46 is a function of fluid volume within the receptacle 30. The reference resistor circuits 70 may be voltage dividers, such as an about 10 kΩ resistor and an about 700 Ω resistor electrically connected in series, to yield an output voltage that is a known and substantially constant fraction of an input voltage.

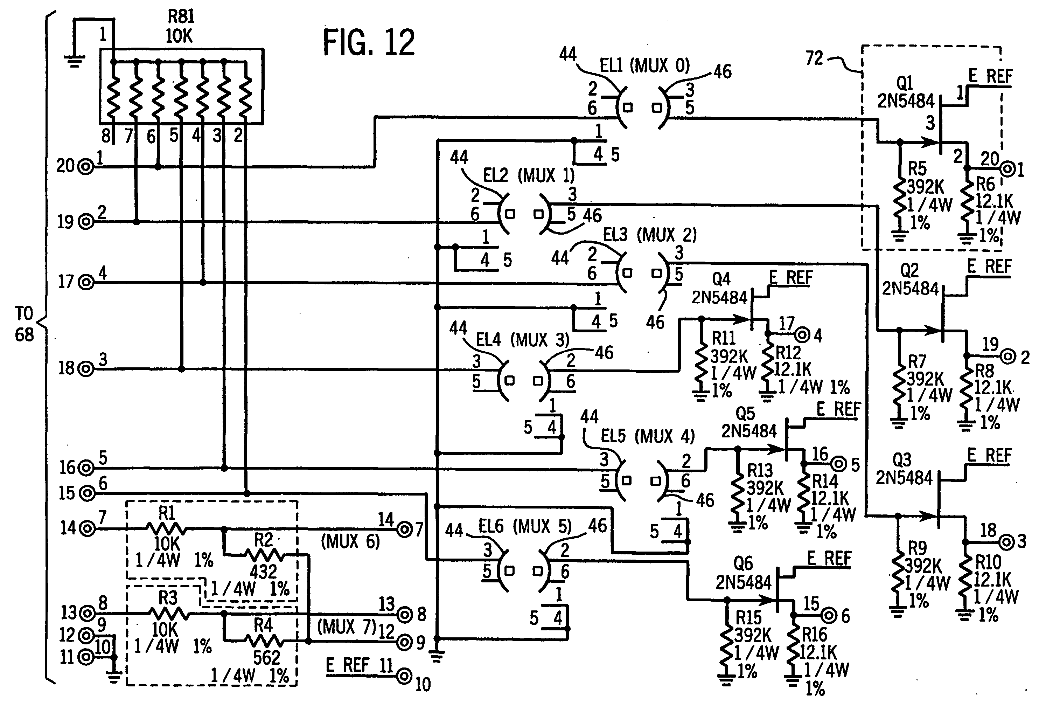

The electrical signal received by the conductor 46 is electrically connected via a buffer 72 (Fig. 12) to the switch 68. The switch 68 electronically connects the conductor 46 from the selected receptacle 30 to the remainder of the circuit 61. The switch 68 may be a dual multiplexer with an address input 74 (Fig. 10) from the feedback mechanism 14 or may be two multiplexers controlled so that both the conductor 44 and the conductor 46 associated with a given receptacle 30 are connected to the circuit 61 simultaneously.

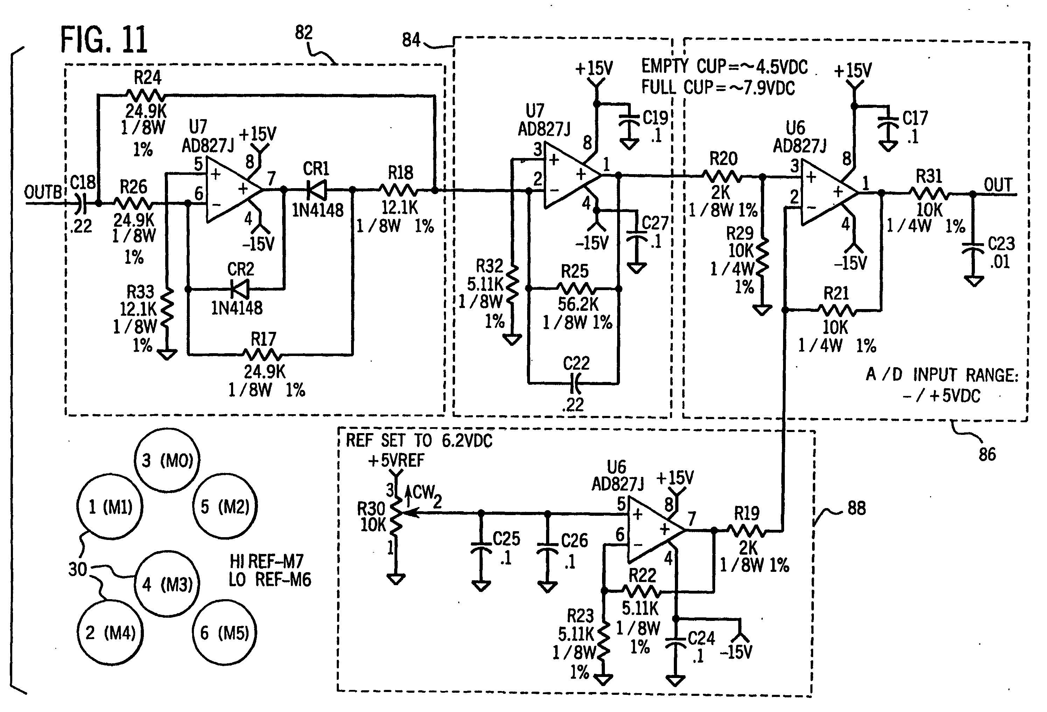

The electrical signal from the switch 68 is electrically connected via an amplifier 76 to a filter 78 (bandpass). The amplifier 76 has a gain of about 20. The filter 78 has a passband of about 60 kHz centered at about 100 kHz. The filter 78 is electrically connected with a buffer 80. The output of the buffer 80 feeds into a rectifier 82 (full wave) and an integrator 84 (active). Details of the amplifier 76, the filter 78 and the buffer 80 are illustrated in Figs. 9A and 9B. Details of the rectifier 82 and the integrator 84 are shown in Fig. 11.

The output of the integrator 84 is a substantially steady direct current voltage which is approximately linearly related to an amplitude of the electrical signal received by the conductor 46. This output is indicative of a volume of fluid disposed in the selected receptacle 30. This direct current voltage is applied to an amplifier 86 (Fig. 11), with a gain of about 5, that imposes an adjustable offset of the order of about 8.8 Volts (DC). The offset, controlled by an adjustable reference voltage circuit 88 (Fig. 11), is set prior to use of the apparatus 10 by substantially filling all of the associated receptacles 30 with about 350 µl of a fluid, such as degassed, deionized water and the like, and adjusting the offset so that all receptacles 30 yield an output voltage of about 0.0 Volts (DC). The output of the amplifier 86 is an electrical signal that varies between about 0 Volts (DC) and about +5 Volts (DC). The output of the amplifier 86 is transmitted along conductor 90 to the feedback mechanism 14.

The feedback mechanism 14, shown in Fig. 8, generally contains an analog to digital converter 92 which, in this embodiment, is a 17 bit converter with sign. The converter 92 converts the output voltage from the sensor unit 12 to a numerical value. The feedback mechanism 14 also includes the display 32 to display the numerical value from the converter 92 or another numerical value. The feedback mechanism 14 also includes a energy supply unit 94 to receive electrical energy from the source 16 of electrical energy to supply electrical energy to the components of the feedback mechanism 14 and the sensor unit 12. The feedback mechanism 14 also may contain data processing circuitry 96 (such as a microcontroller and the like) to control operation of the apparatus 10, an input/output circuit 98 which acts as an interface between the feedback mechanism 14 and the sensor unit 12, and communication circuitry 100 (such as an RS-232 serial transfer device and the like) to transmit data to the computer 26 or some other device for further processing, evaluation, or storage.

In this embodiment, the microcontroller 96 sends a three-bit binary address signal via the input/output circuit 98 to the sensor unit 12 that corresponds to the desired receptacle 30 or reference resistor circuit 70. The three-bit binary address signal is applied to the address lines 74 of the switch 68. The electrical signal indicative of the volume of fluid disposed in the selected receptacle 30 is applied to the analog to digital converter 92. The analog to digital converter 92 produces a digital numerical signal which is transmitted via the communication device 100 to the computer 26 and may also be displayed on the display 32.

With the construction of an embodiment of an apparatus for verifying a volume of a fluid being disclosed in detail, an embodiment of a method of verifying a volume of fluid or operation of the apparatus 10 will now be disclosed. For the sake of clarity, the methods will be discussed in relation to' the apparatus 10. However, the methods may be employed with any suitable mechanism. A plurality of methods are detailed.

In general, one method of checking or verifying a volume of fluid comprises the following steps. The apparatus 10 is positioned with respect to the analytical instrument 18 such that a receptacle 30 is operatively connected with a fluid dispense nozzle'on the instrument 18. The operative connection between the receptacle 30 and the dispense nozzle is such that fluid exiting the dispense nozzle enters the receptacle 30.

Fluid exits the dispense nozzle and enters the receptacle 30. An electrical signal is applied to the conductor 44. An electrical signal is created in the conductor 46 responsive to the electrical signal applied to the conductor 44. The electrical signal created in the conductor 46 is monitored. Because an amplitude of or a voltage associated with the electrical signal created in the conductor 46 is related to the volume of fluid present in the receptacle 30, appropriate monitoring of the electrical signal created in the conductor 46 provides an indication of the volume of fluid within the receptacle 30. The apparatus 10 provides feedback to an operator or a computer corresponding to the volume of fluid within the receptacle 30.

More specifically, the following methods can be used along with the apparatus 10, or an equivalent device, to verify a volume of fluid.

### System calibration

The apparatus 10 may be calibrated by performing the following method steps.
1. Using a mass balance, determine a volume of fluid dispensed by a precision test pump. In one embodiment, the volume of fluid measures about 50 µl. The test pump may be a valveless metering pump such as that described in U.S. Patent No. 5,246,354. That patent is assigned to the assignee of the present application. The disclosure of that patent is incorporated herein by reference. The pump should be primed prior to use.
2. Install liners 58 in apertures 31 in the sensor unit 12 and rinse the liners 58.
3. Fill all receptacles 30 with about 350 µl of degassed, deionized water.
4. Adjust the reference circuit 88 so that the digital output of the analog to digital converter 92 for all channels is greater than about -45,000.
5. Make about 6 additions, measuring of about 50 µl each, of degassed, deionized water to each receptacle 30 from the precision test pump. While making these-additions, monitor the output of the analog to digital converter 92.
6. Calculate the average change in output of the analog to digital converter 92 for each addition of degassed, deionized water to each of the receptacles 30. The slope is approximately equal to the difference in counts between a period following the initial dispense of about 350 µl of water and a period after the about 6 additional dispenses of water multiplied by 50 and divided by the actual volume dispensed (6 times the precision test pump dispense volume). This slope may be used for volume verification and may be stored in an appropriate memory, such as a RAM, a ROM, an EPROM, a SRAM and the like, which may be located in the feedback mechanism 14.

### Volume verification

To verify a volume of fluid dispensed by a pump in an analytical instrument 18 with the apparatus 10, the apparatus 10 is calibrated as discussed above. After calibration, the following steps are performed.
1. Install new liners 58 in the sensor unit 12.
2. Prime the dispense pump by dispensing fluid from the dispense pump at least about 10 times.
3. Make available the slope data, determined during calibration, for the sensor unit 12.
4. Add about 350 µl of degassed, deionized water to each of the receptacles 30.
5. Make 6 additions of about 50 µl each of degassed, deionized water to each receptacle 30 from the precision test pump. While making these additions, monitor the output of the analog to digital converter 92.
6. For each dispense, calculate the volume of the dispensed water by multiplying the difference in counts from the analog to digital converter 92 before and after the dispense by 50 µl and by dividing by the slope determined in the calibration process.
7. calculate the mean and the coefficient of variation of the dispensed volume.

In an example of the above method steps, a test pump was adjusted to dispense about 47.5 µl of degassed, deionized water, as measured by a mass balance. In 12 verification runs, the average error detected by the apparatus 10 was about 0.21 µl or about 0.42 percent (with a range of about 0.0 µl to about 0.63 µl or substantially within the range of about 0.0% to about 1.26%). The coefficient of variation of dispensed volume readings within the twelve runs averaged about 0.88 percent (with a range of about 0.18% to about 1.95%).

### Automated reading

An example of software that may be used to operate or process information from the apparatus 10 is presented at the end of this discussion and preceding the claims. This software, written in structured BASIC, may be executed by the computer 26 which may or may not be integrated with the instrument 18. The routine performs the following steps. Relevant portions of the routine are flagged by STEP and the number of the step, which corresponds to the numbers below.
1. Establish communication via the communication circuit 100 between the computer 26 that is executing the software routine and the feedback mechanism 14.
2. Select a receptacle 30. A data packet indicating this receptacle 30 is transmitted to the feedback mechanism 14. The feedback mechanism 14 converts this data packet to a three-bit digital address signal that is transmitted to the sensor unit 12 via the address lines 74.
3. The digital output from the analog to digital converter 92 of the feedback mechanism 14 is received by the computer 26 via the communication circuit 100. This step is executed in the subroutine entitled "RCV," which contains two steps.
   3a. Each serial data packet, in one embodiment one byte representing an ASCII character, from the communications circuit 100 of the feedback mechanism 14 is received as a character value.
   3b. The data received from the communication circuit 100 is appended to preceding data packets to form a character string. The signal normally consists of a series of ASCII characters, the first eight of which are the decimal value of the analog to digital converter 92 output and the ninth which is the decimal value of a channel number, which corresponds to a location on the analytical instrument 18. The seven most significant digits of the analog to digital converter 92 output are used in volume calculations.
4. The character string is converted to two numerical values representing the analog to digital converter 92 output and the channel number.
5. The volume of dispensed fluid is displayed and/or printed.

### Automated verification of dispense volume of fluid

A software routine that may be used with an embodiment of an apparatus to verify a volume of fluid is presented before the claims. This software routine, written in structured BASIC, may be executed on a computer 26. This routine incorporates the routines described above to determine output of the analog to digital converter 92 with additional routines included to execute the following steps.
1. Communication is established via a serial data link between the computer 18 that is executing the software routine and the feedback mechanism 14.
2. The value of the calibration slopes for the various receptacles 30 are read from a preexisting data file. This data file was created using a procedure similar to that described with respect to System calibration.
3. Communication is established between the computer 26 that is running the software routine and the analytical instrument 18.
4. A receptacle 30 is selected for performing verification of a dispensed volume of fluid. This selection may be made by the operator directly or by a routine associated with the analytical instrument 18.
5. The output of the analog to digital converter 92 is monitored by the routine during an initial dispense of about 450 µl of fluid into the receptacle 30. The output values are read using the routines described above.
6. The output of the analog to digital converter 92 is allowed to stabilize.
7. Readings from the reference resistor circuits 70 are taken.
8. The output of the analog to digital converter 92 is monitored by the routine during dispense of about 50 µl of fluid into the receptacle 30. There may be a plurality of such dispenses. The output values are read using the routines described above, located in subroutines "DBLREAD" and "RCV."
9. The output of the analog to digital converter 92 is allowed to stabilize.
10. The numerical value of the analog to digital converter 92 output is stored in suitable memory, such as a RAM, a ROM, an EPROM, a SRAM and the like.
11. Steps 8-10 are repeated for the desired number, such as 6, of dispenses of fluid in the selected receptacle 30.
12. Readings from the reference resistor circuits 70 are taken.
13. The difference in the analog to digital converter 92 output, representing the volume of fluid associated with each dispense, is calculated.
14. The mean dispense volume and standard deviation of the dispense volumes are calculated, along with the deviation from the mean for each individual dispense. This step is executed within the subroutine "CALCULATE."
15. For each of the dispenses performed and verified, the volume of the dispense of fluid is calculated, is printed and/or is displayed and is stored in a record file.
16. The mean and standard deviation of the dispensed volume for all dispenses are printed.
17. The mean and coefficient of variation are compared to a predetermined "pass" criteria.

The methods discussed herein may be controlled or executed manually or by a controller, such as the computer 26 and the like, or may be controlled by software residing on and running within memory comprising the analytical instrument 18. By verifying a dispensed volume of fluid, an implicit test of the fluid delivery system, comprising a fluid source, a pump, a fluid conveying conduit, a dispense nozzle, etc., is made. Thus, the apparatus and method described herein may give an operator an indication of status of elements of a fluid system associated with the analytical instrument 18.

A listing of the above-discussed software routines follows presently. The **STEP** numbers correlate to the numbers used in the above discussion.

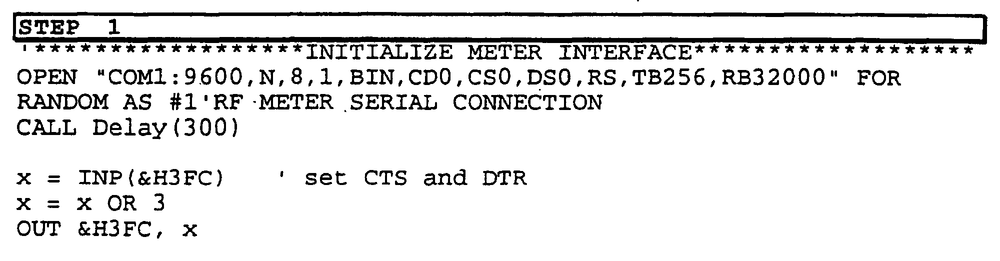

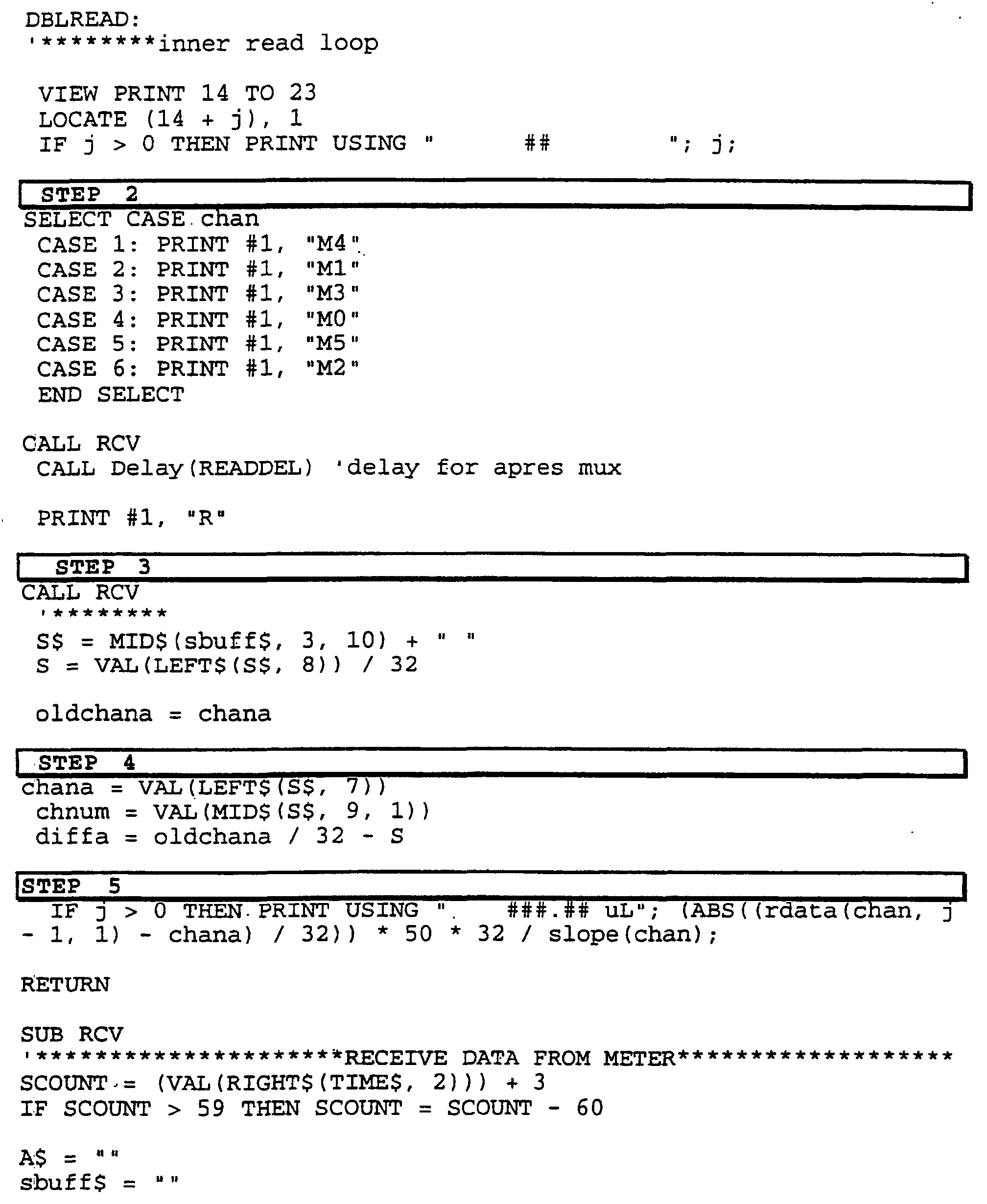

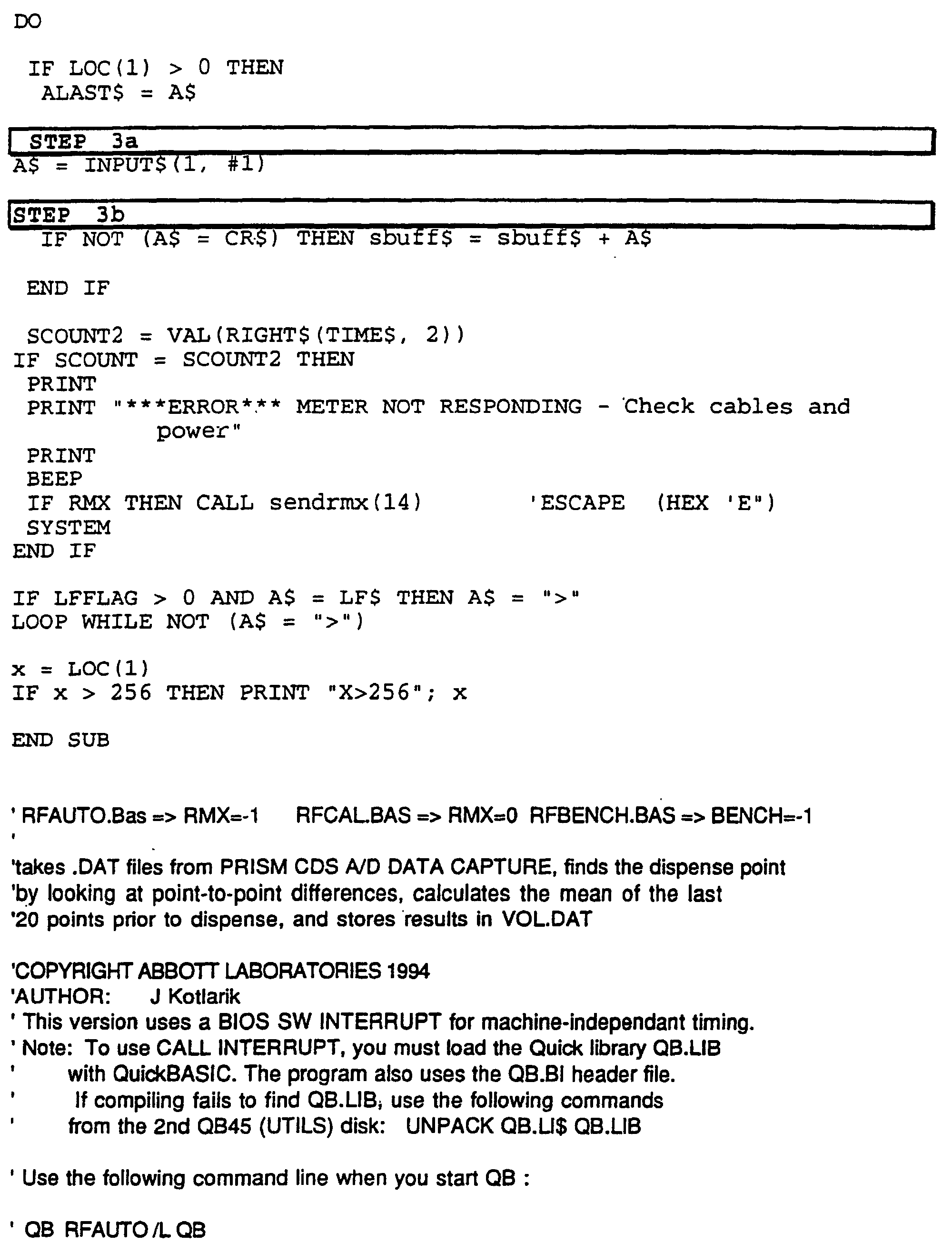

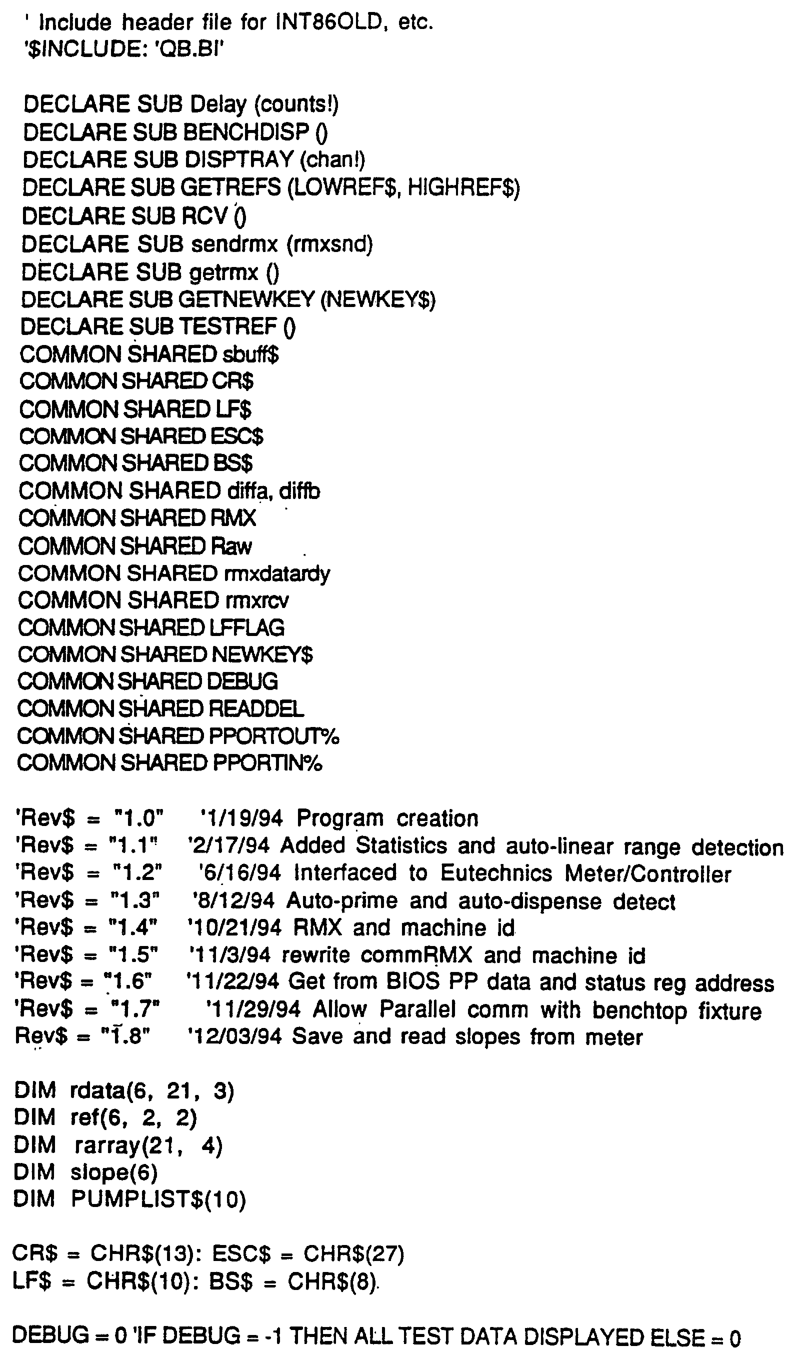

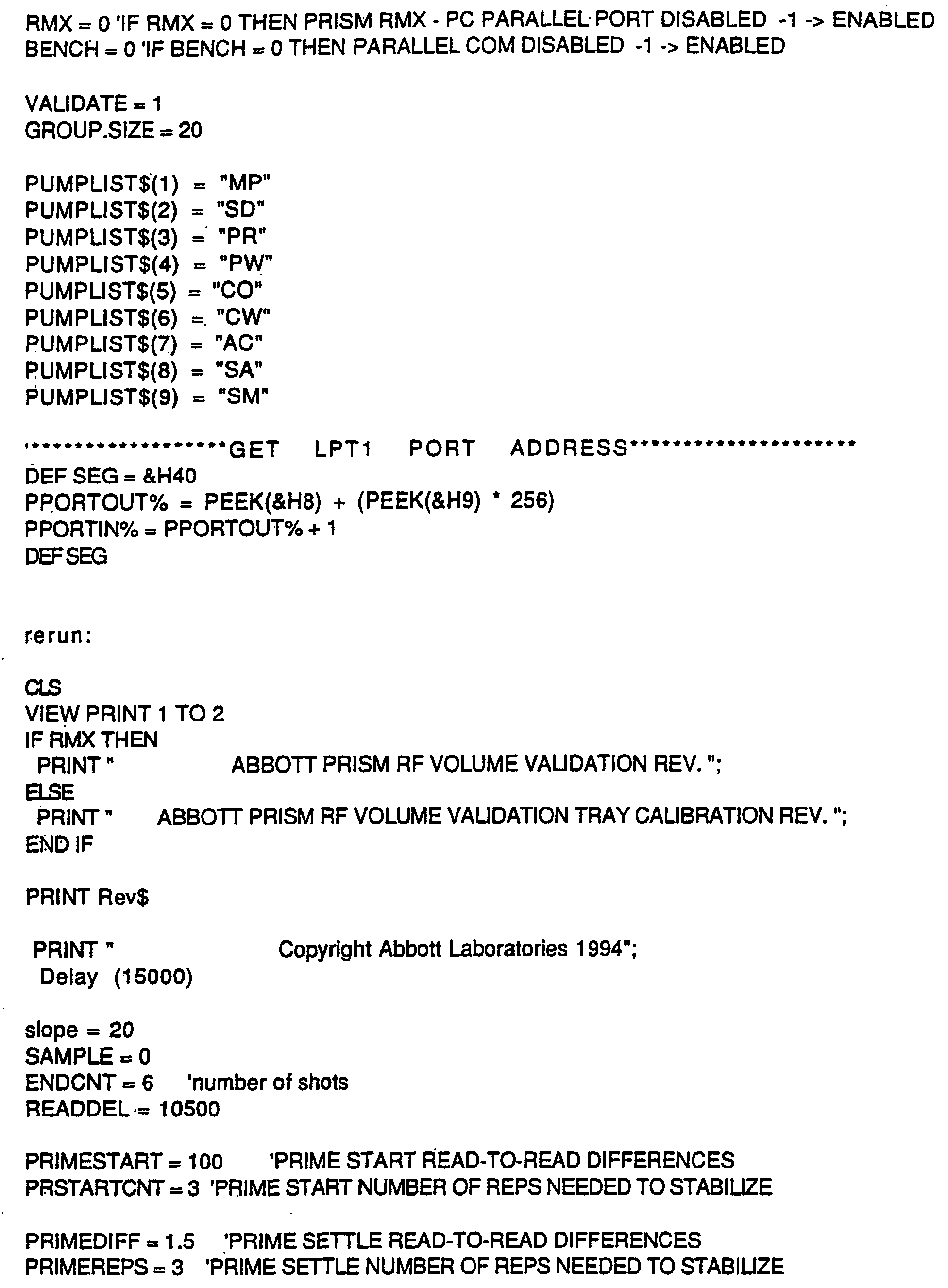

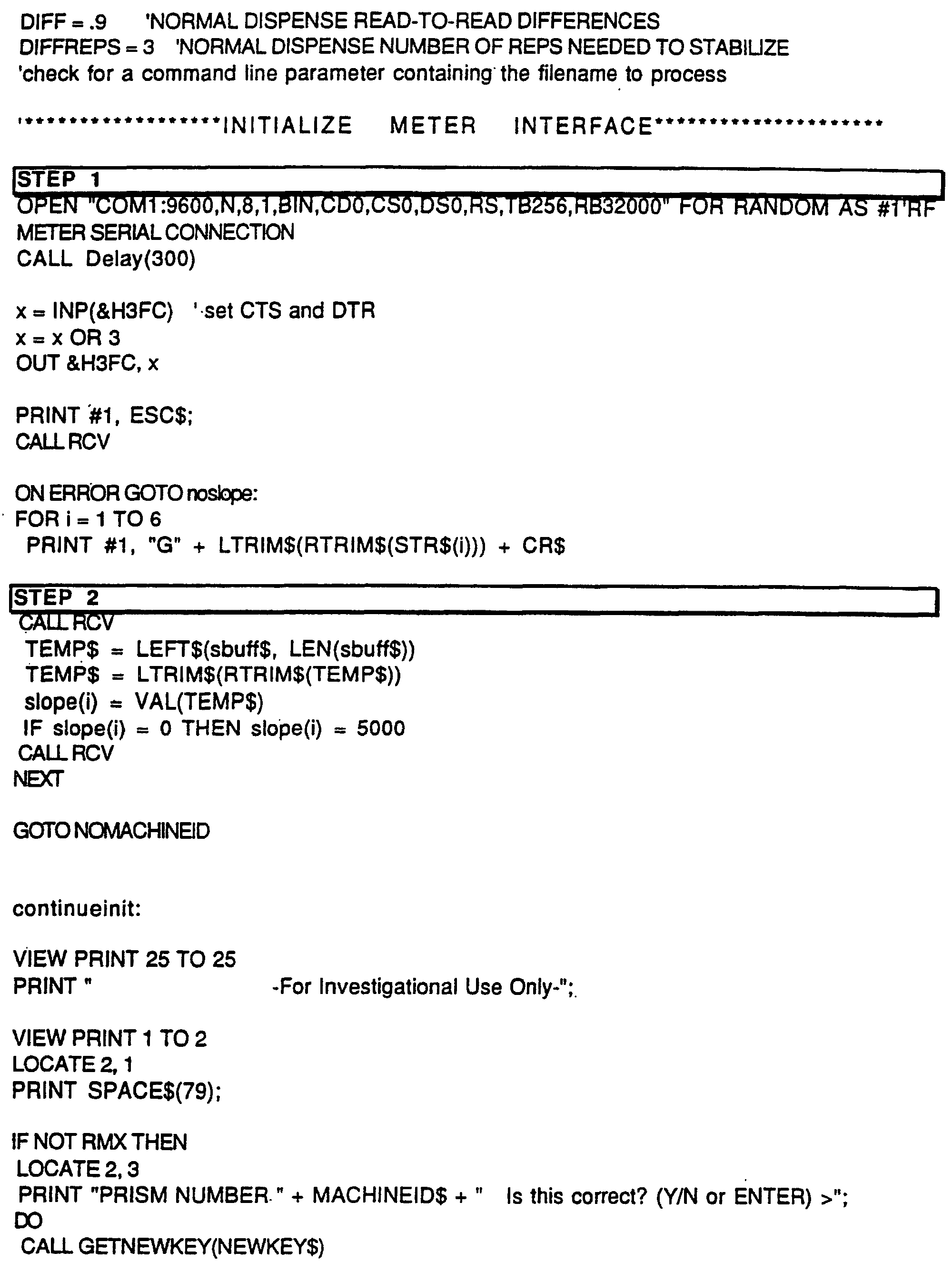

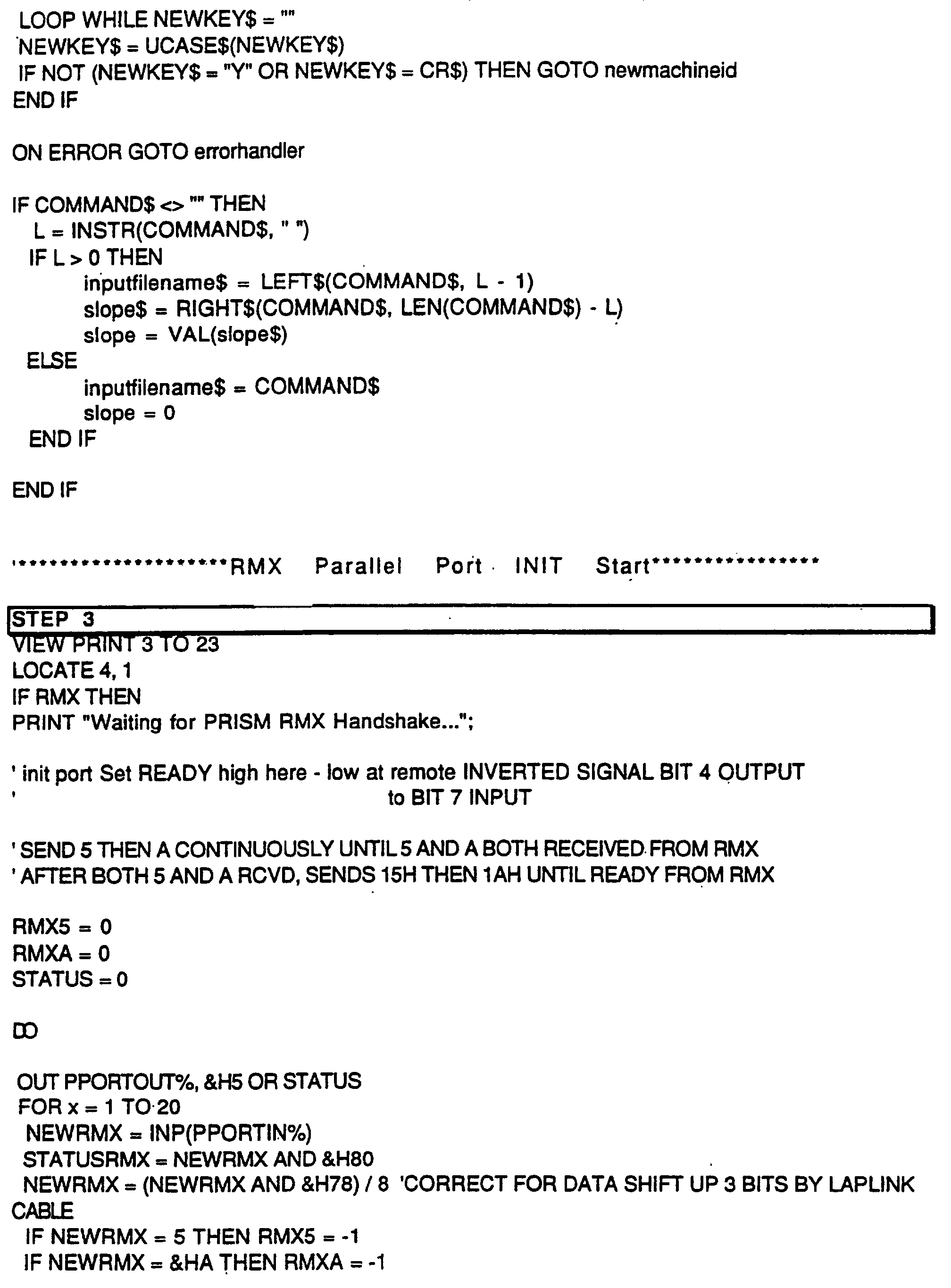

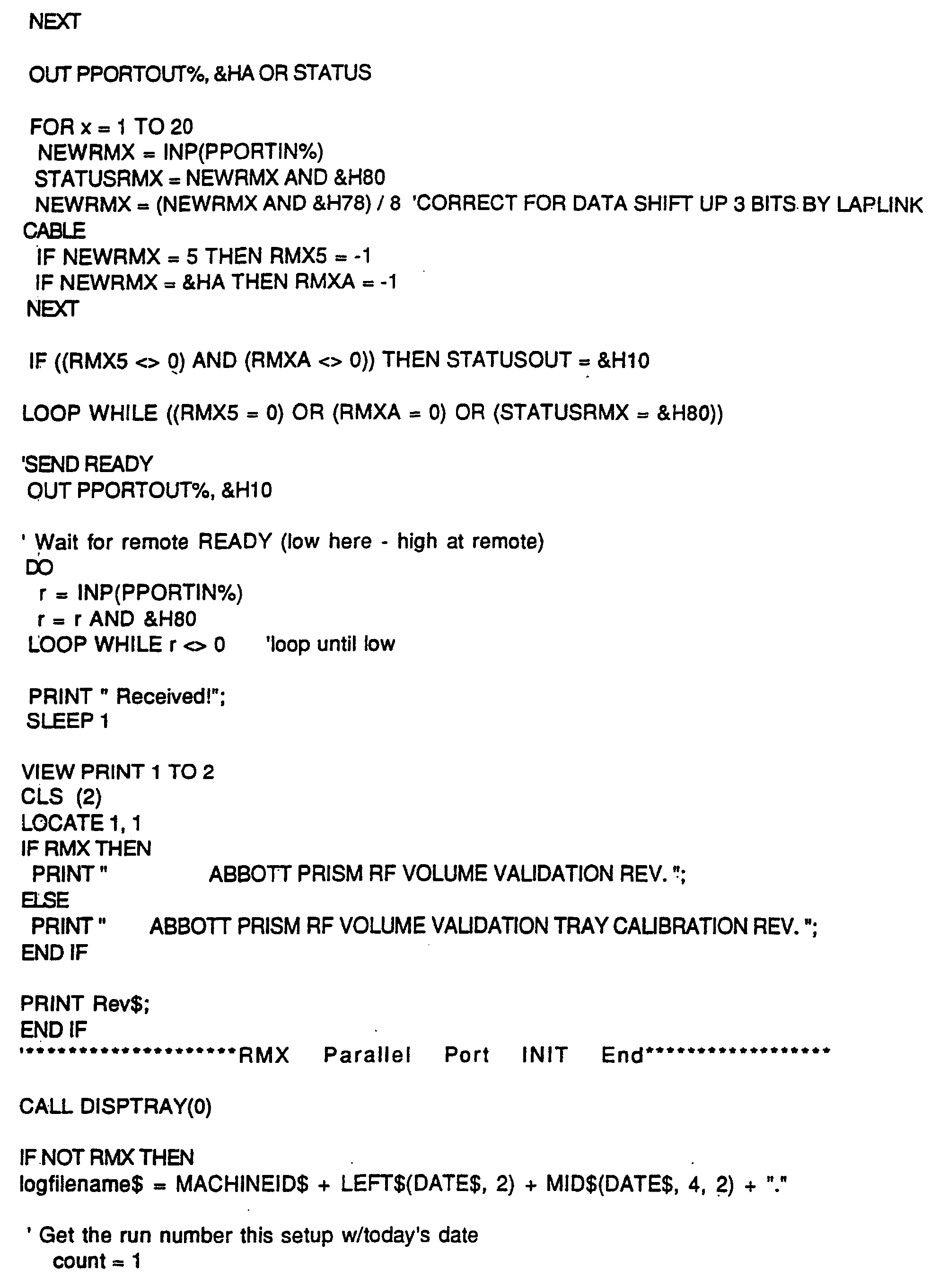

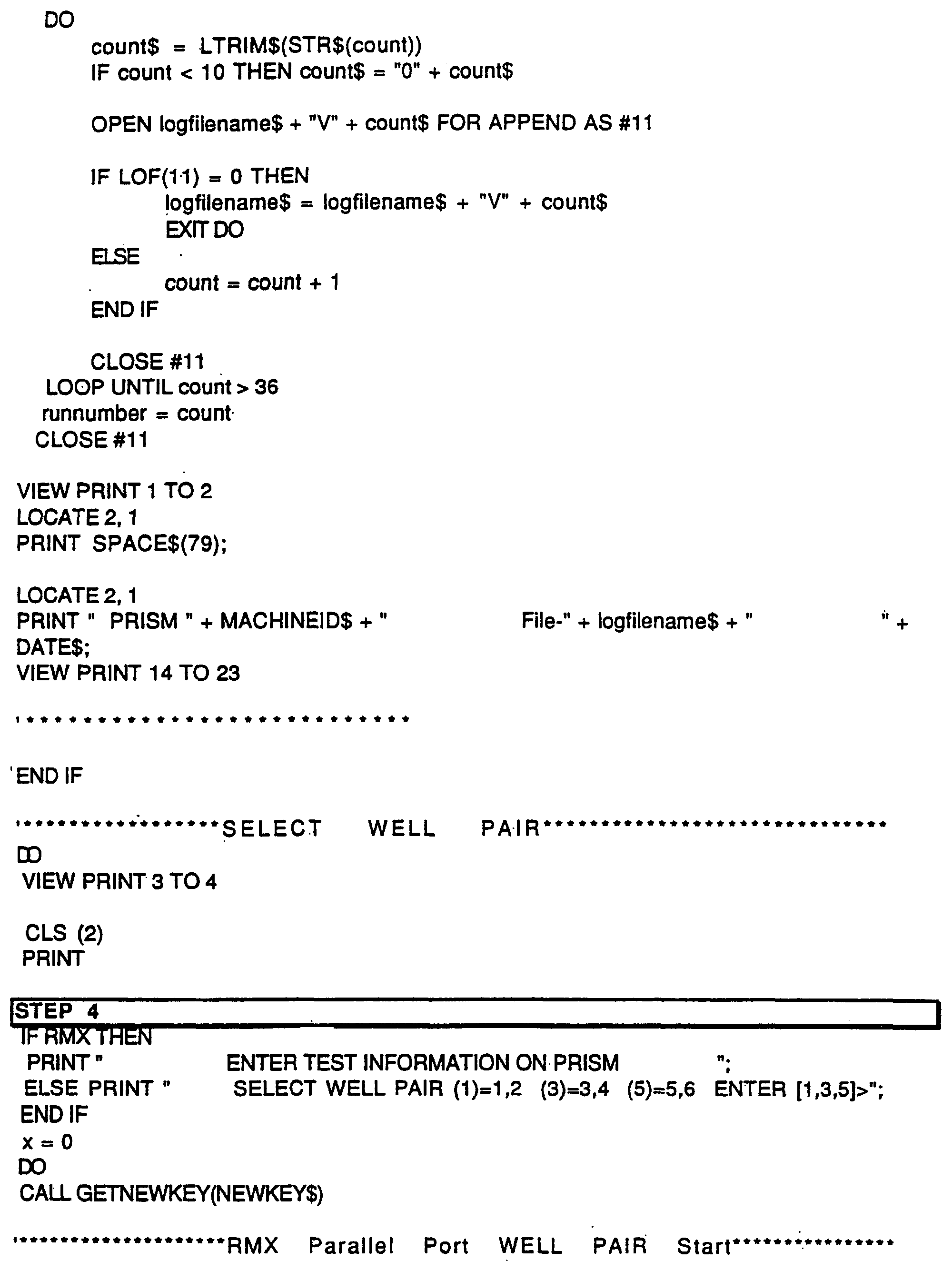

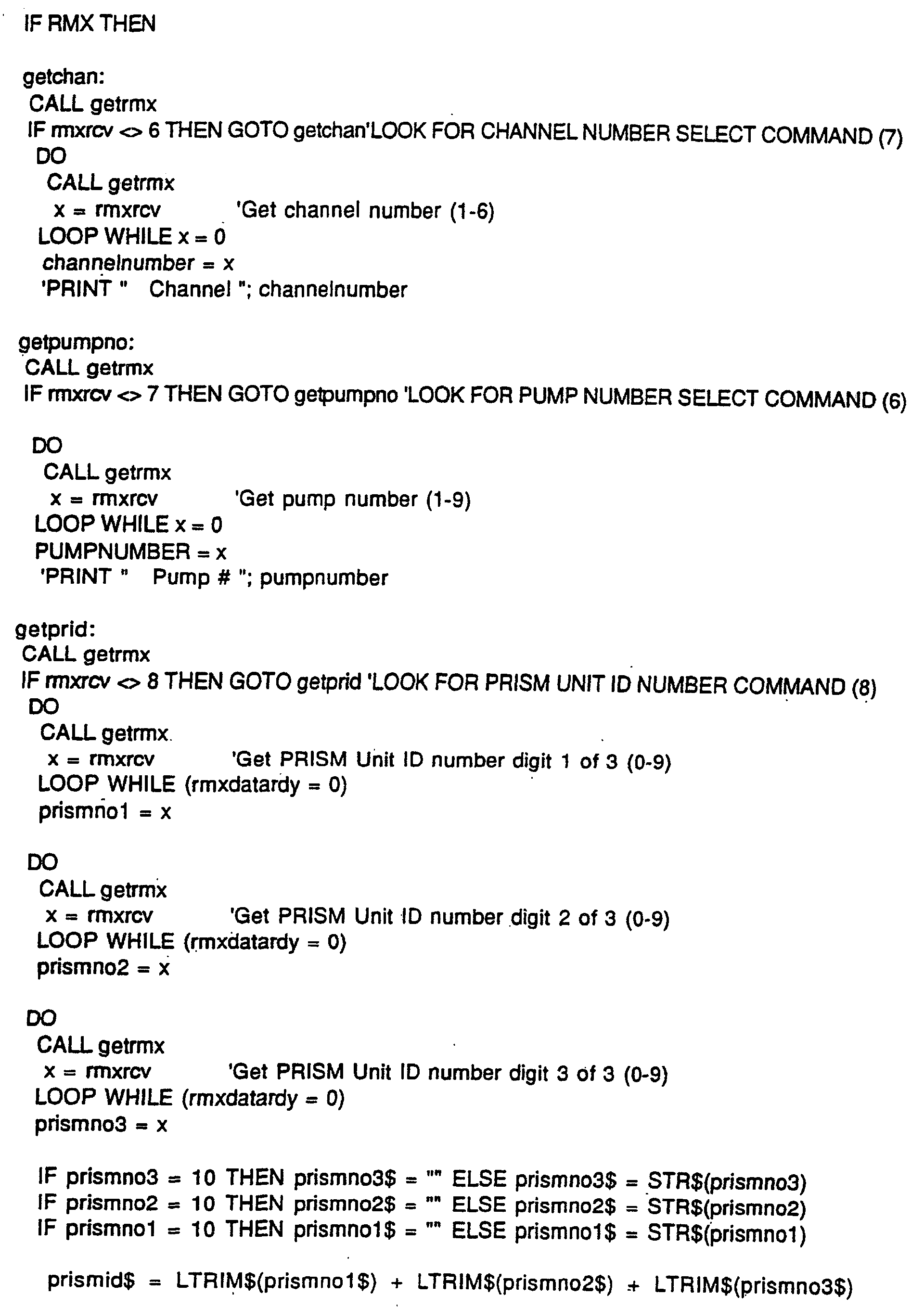

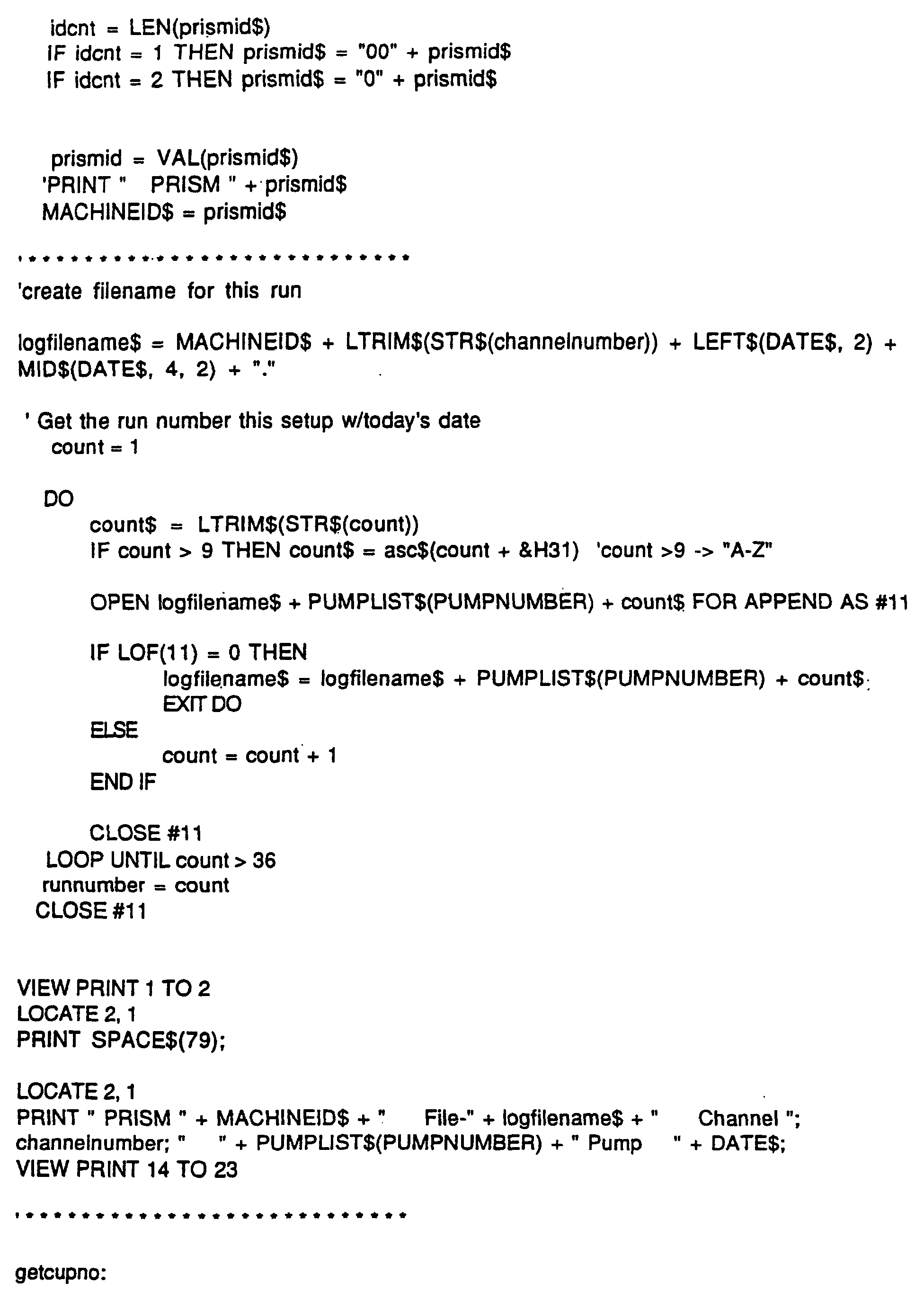

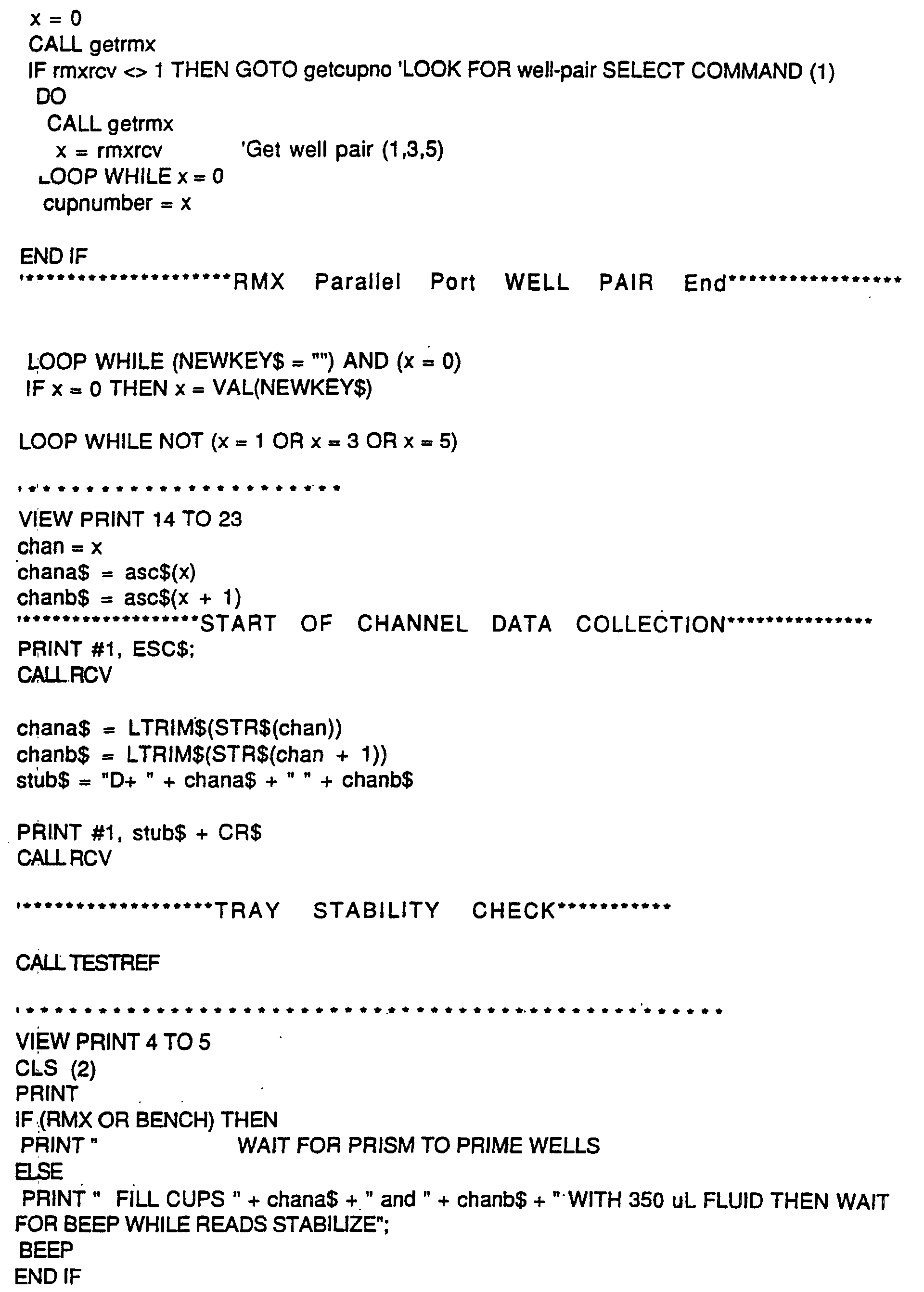

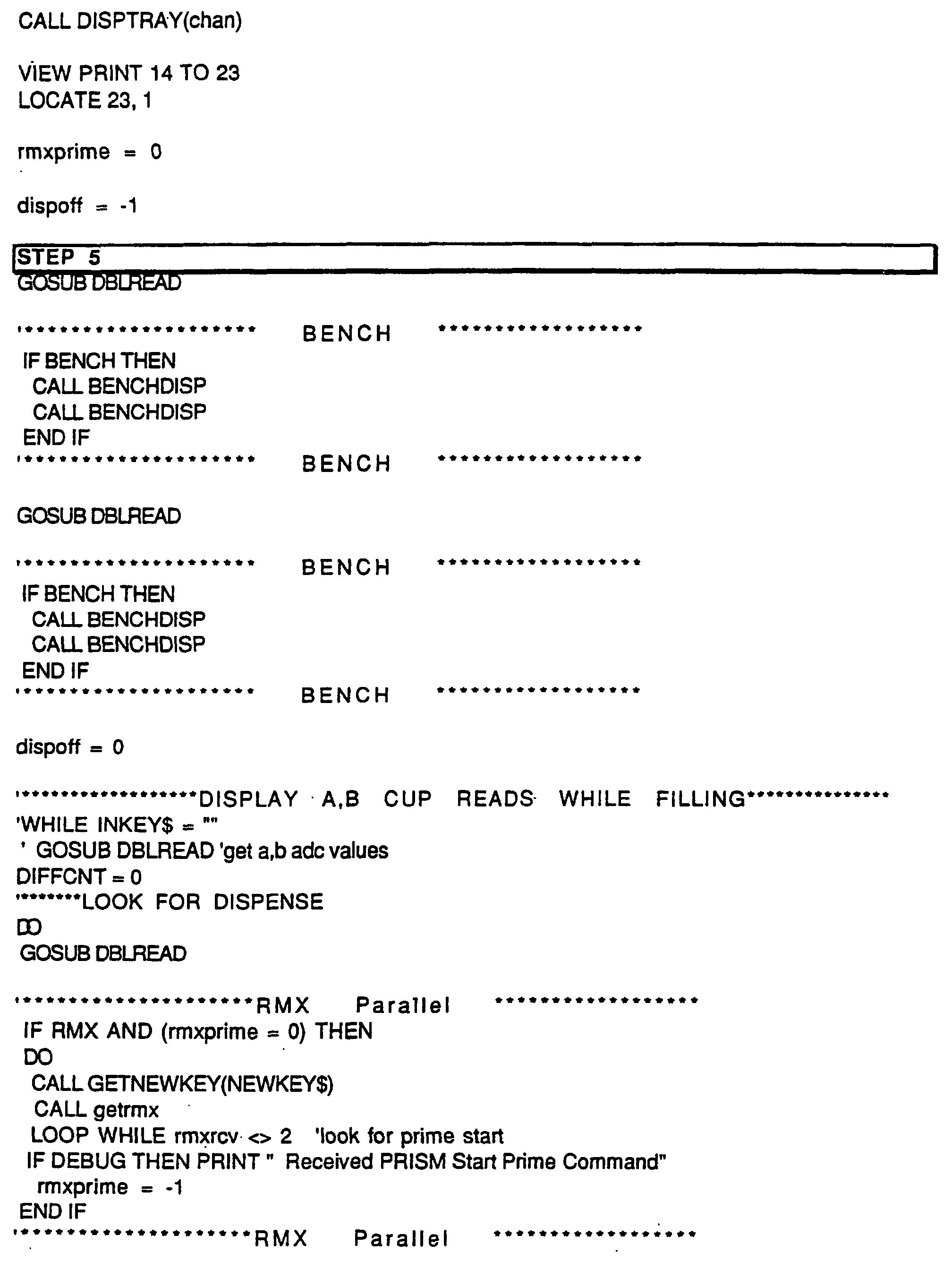

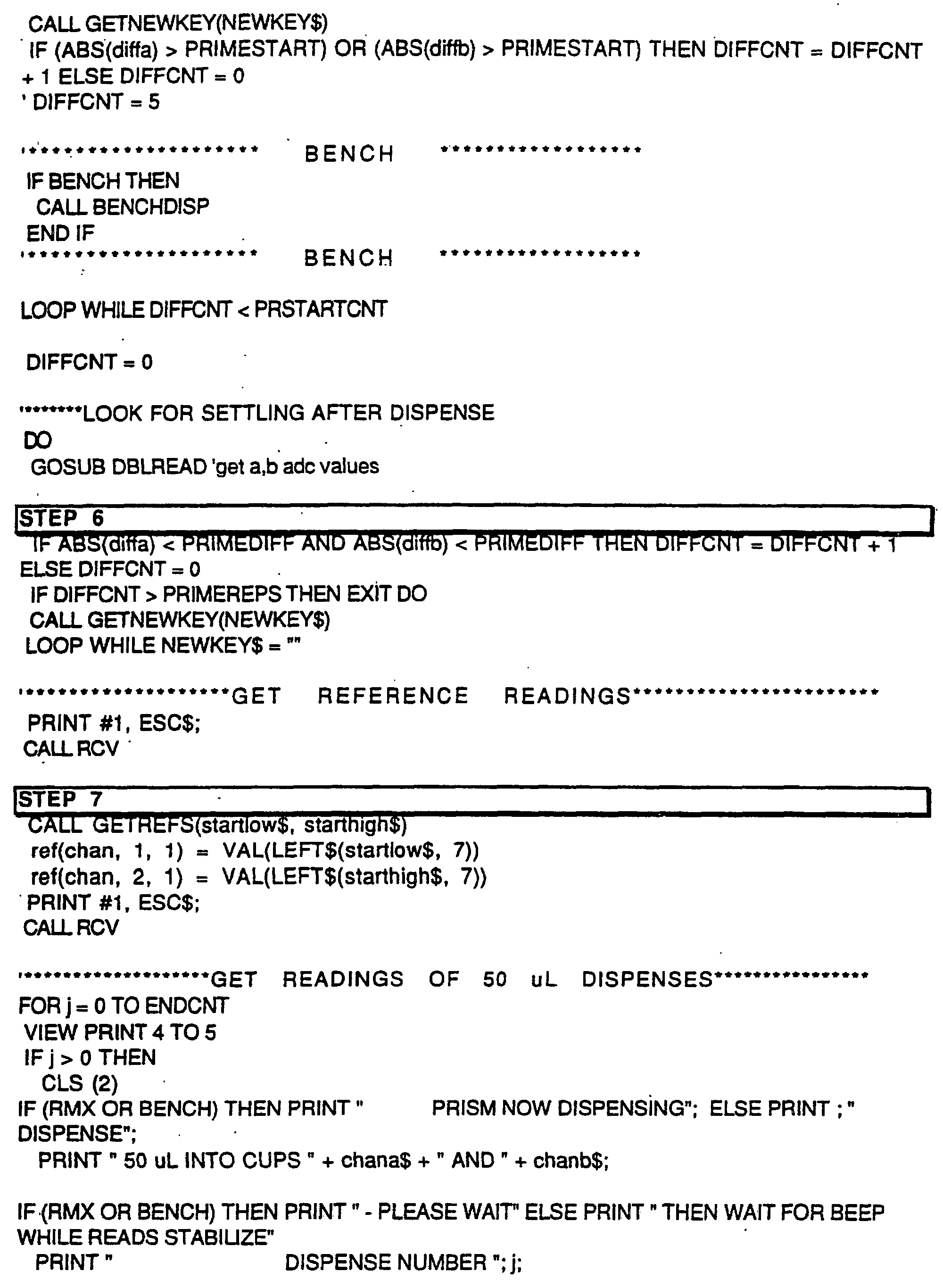

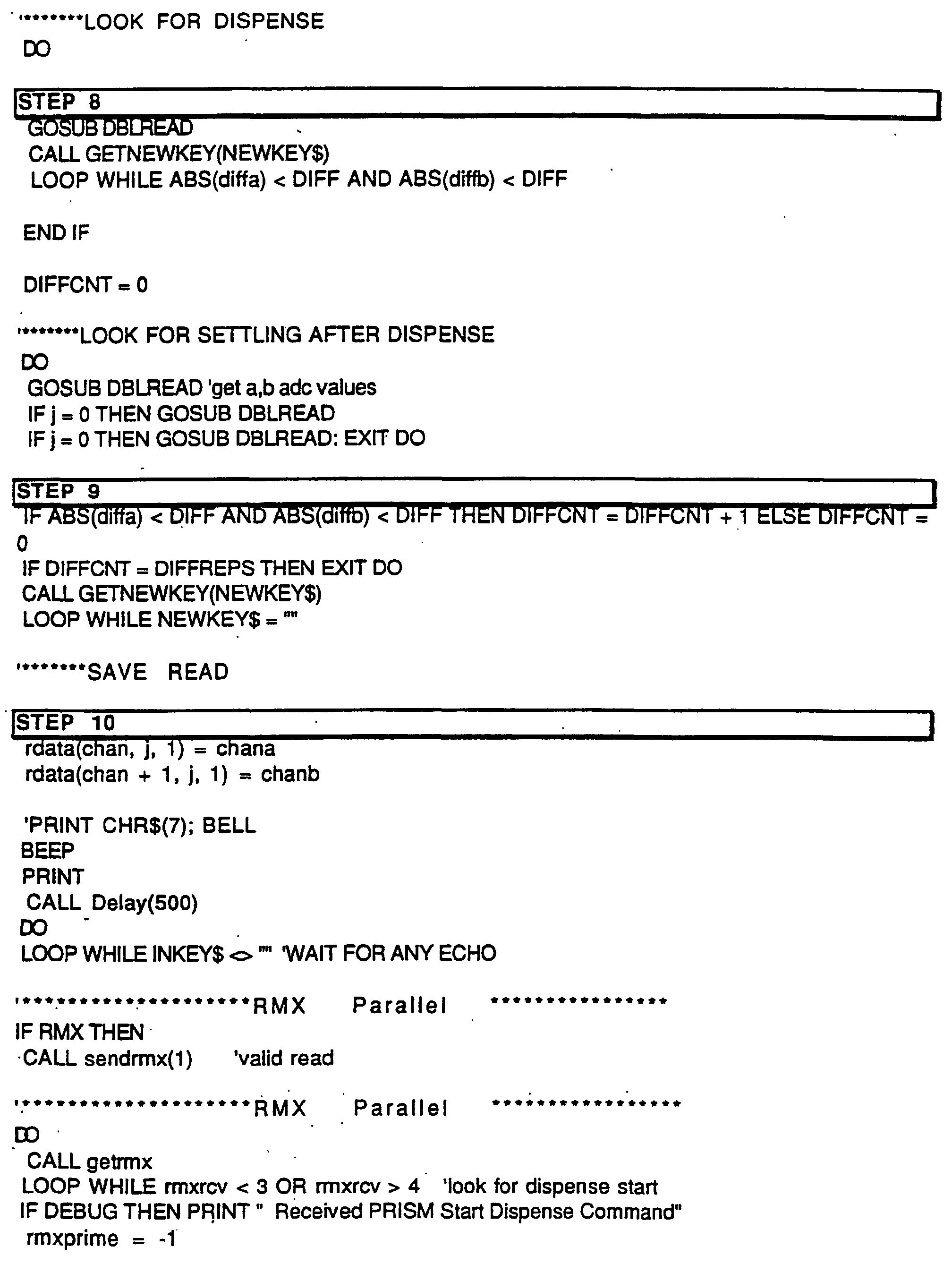

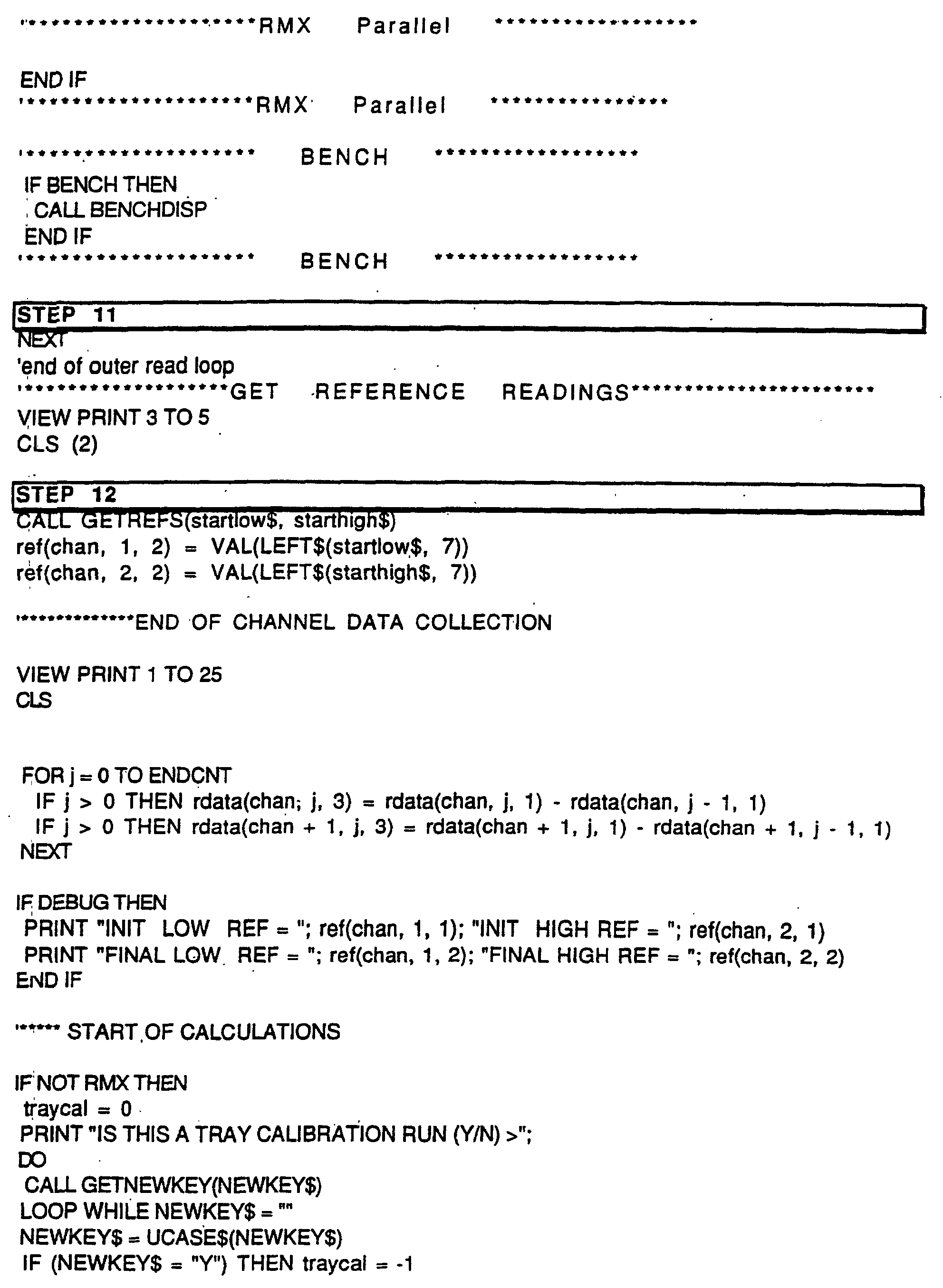

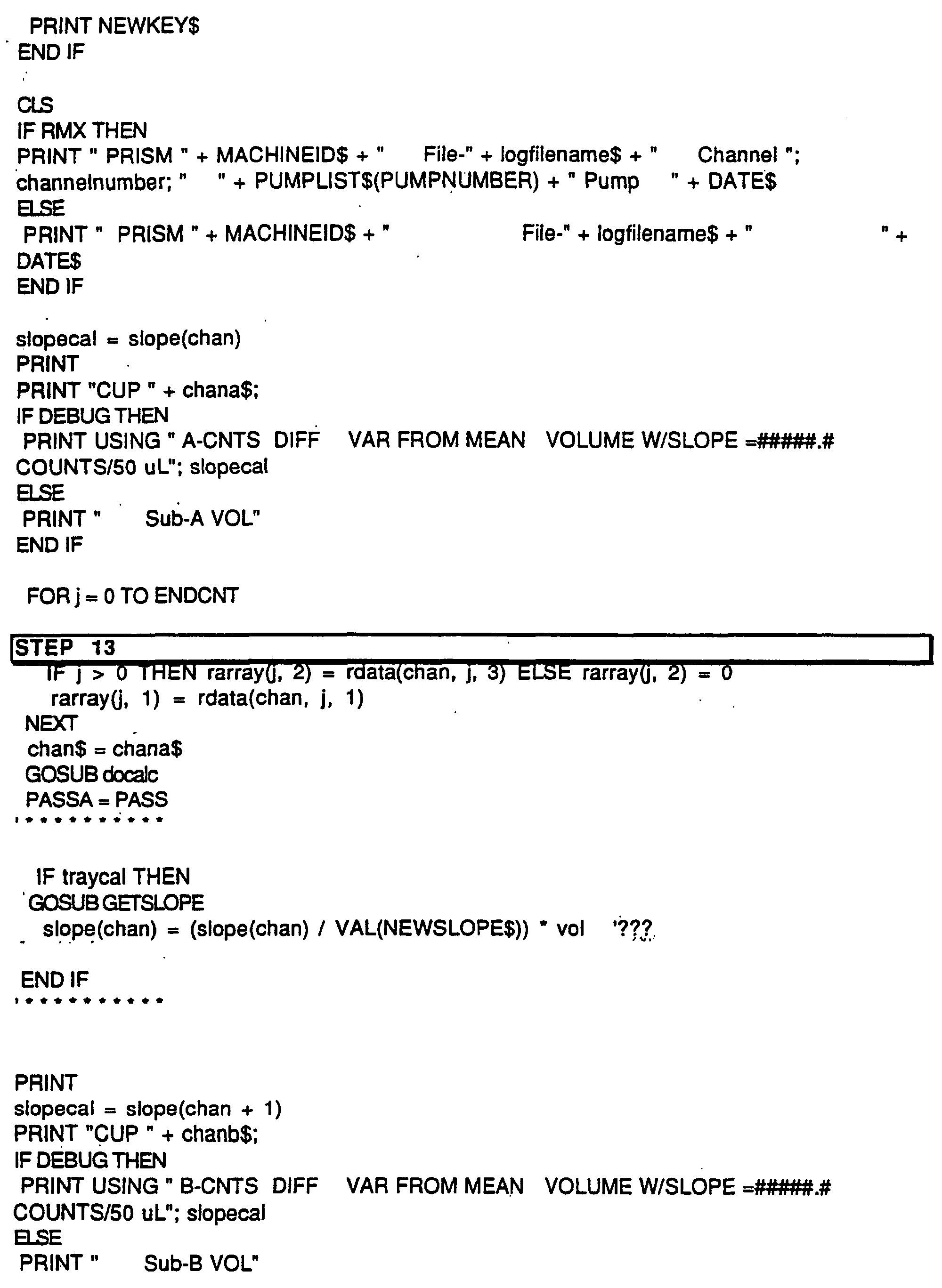

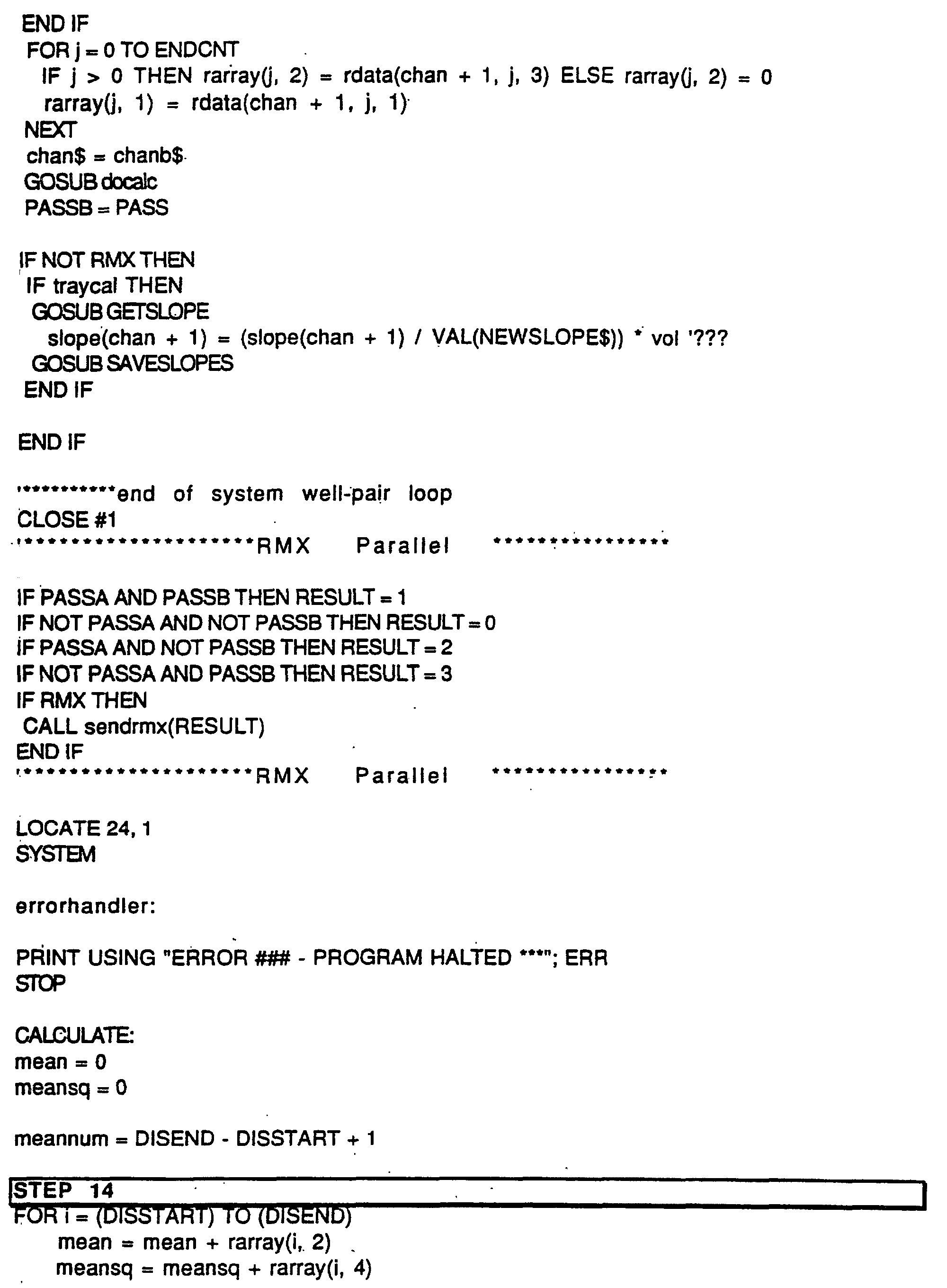

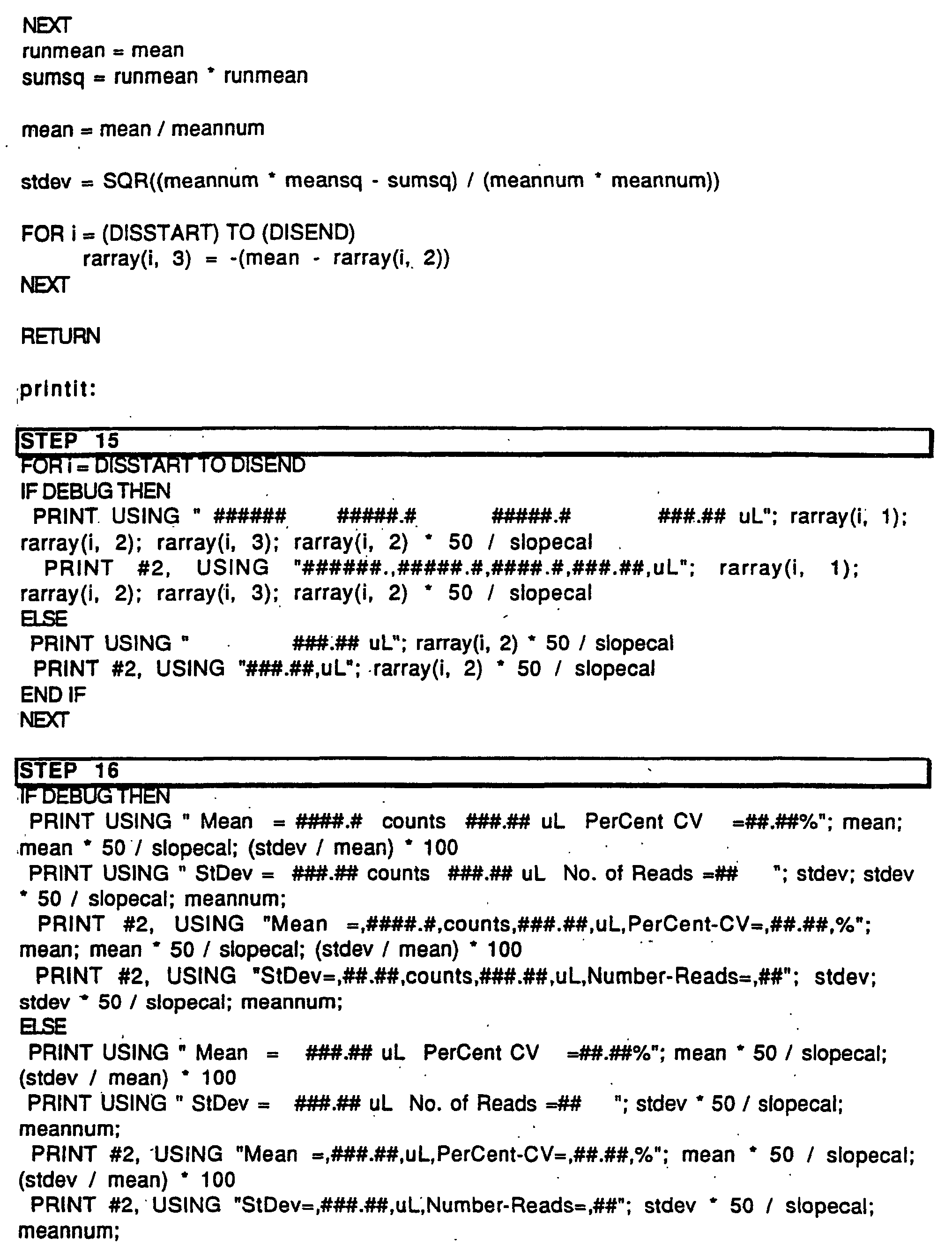

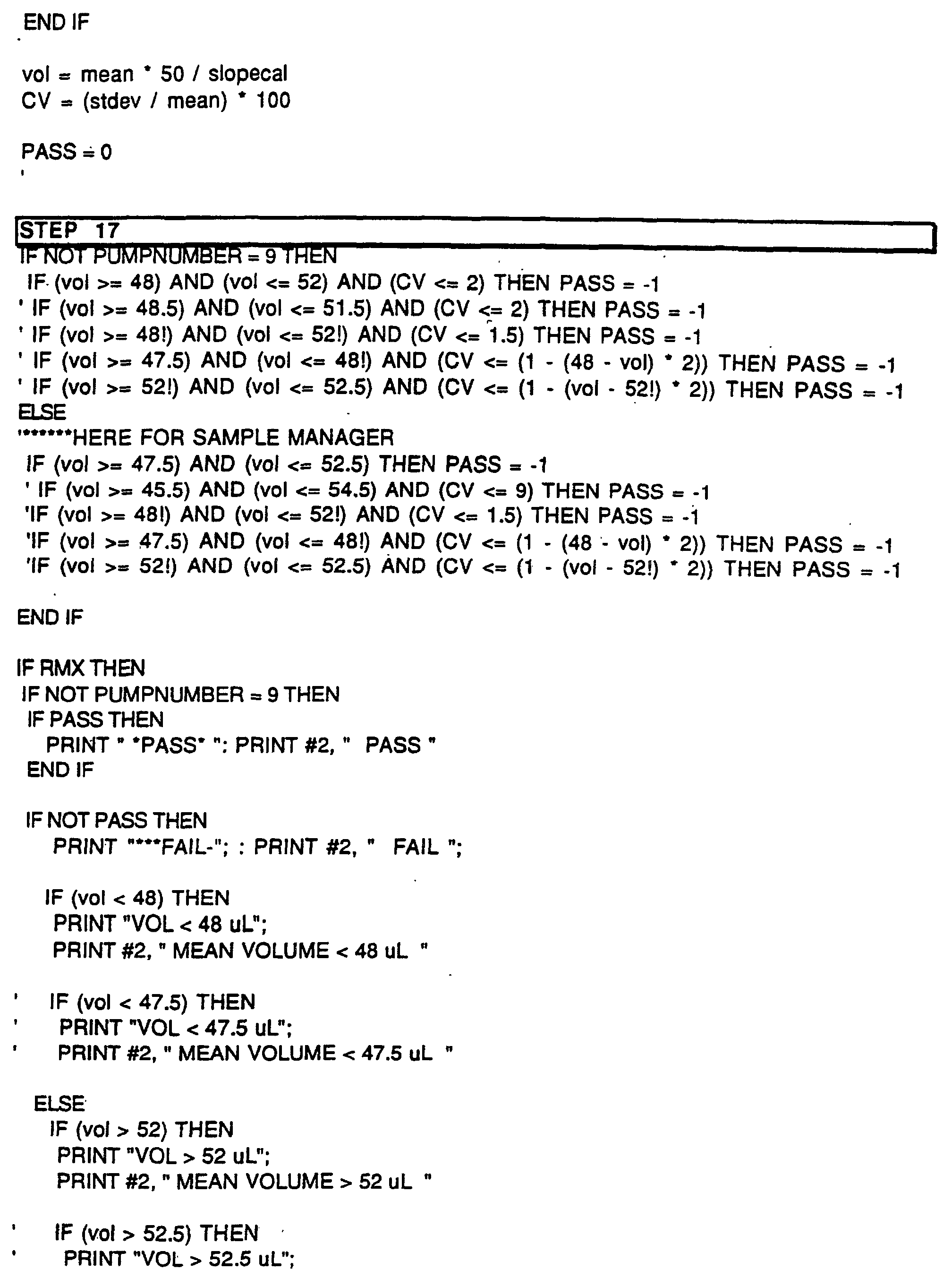

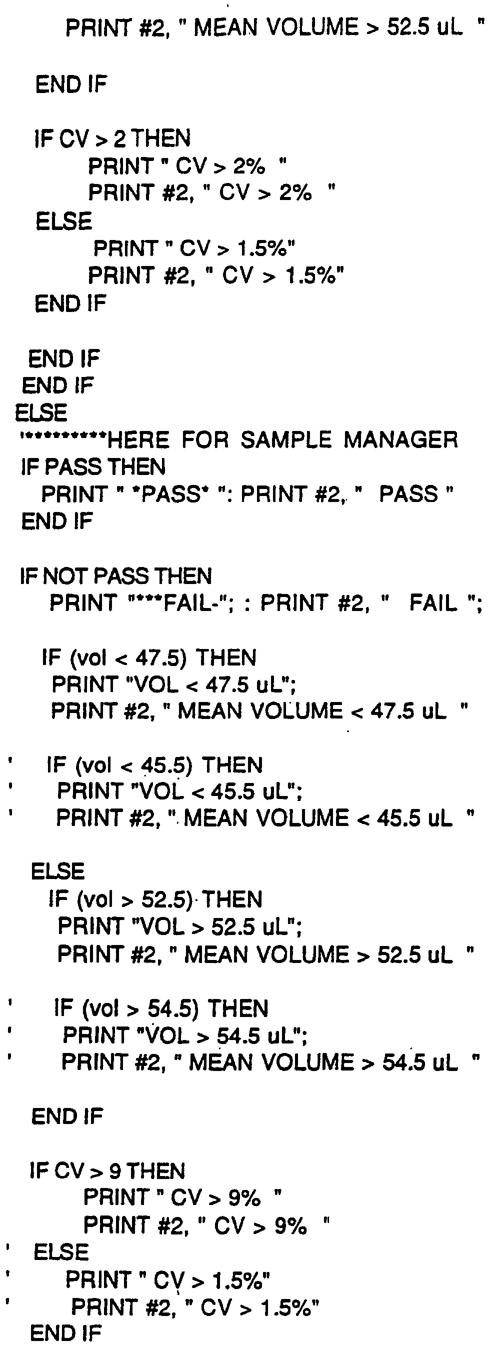

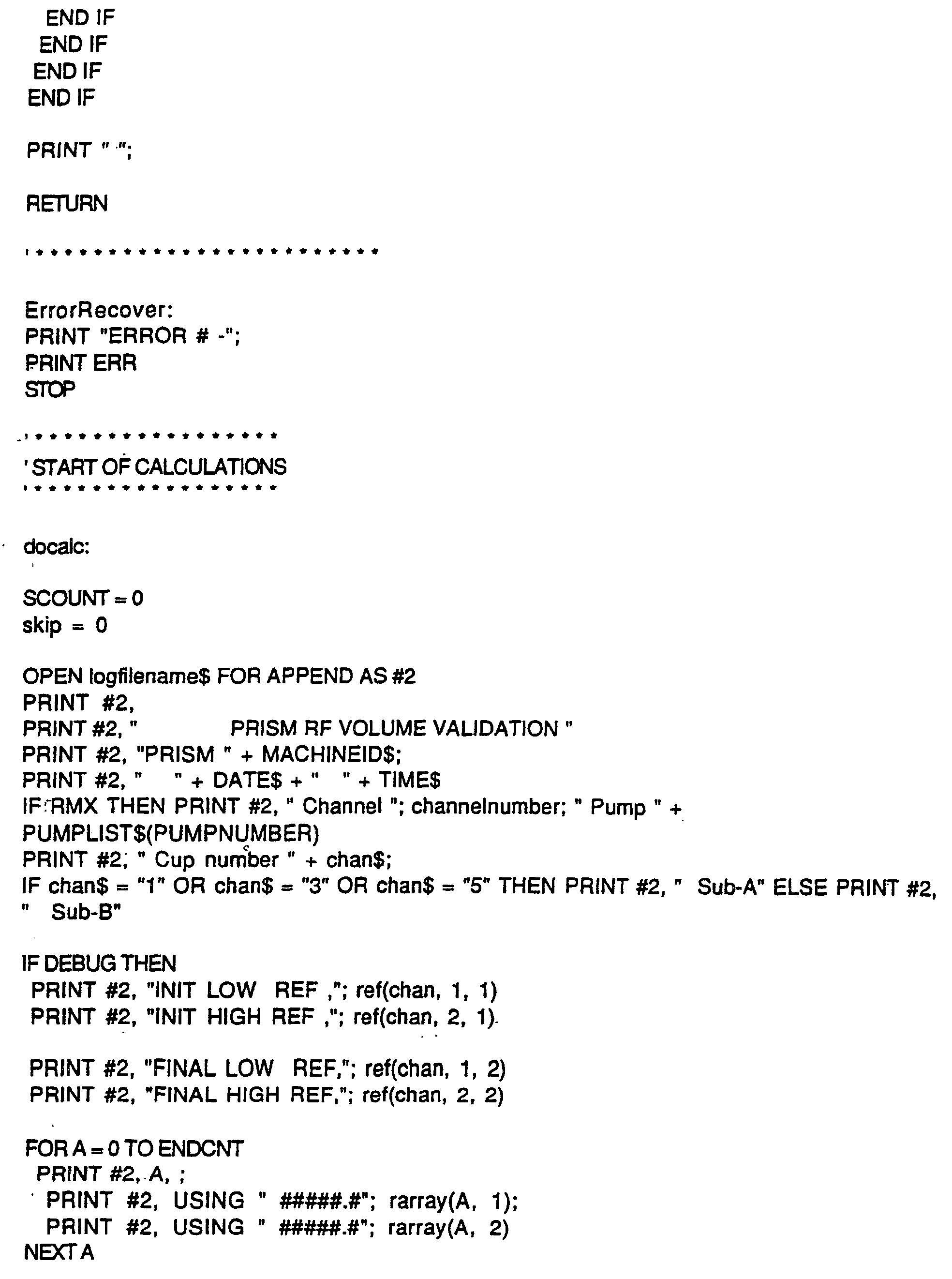

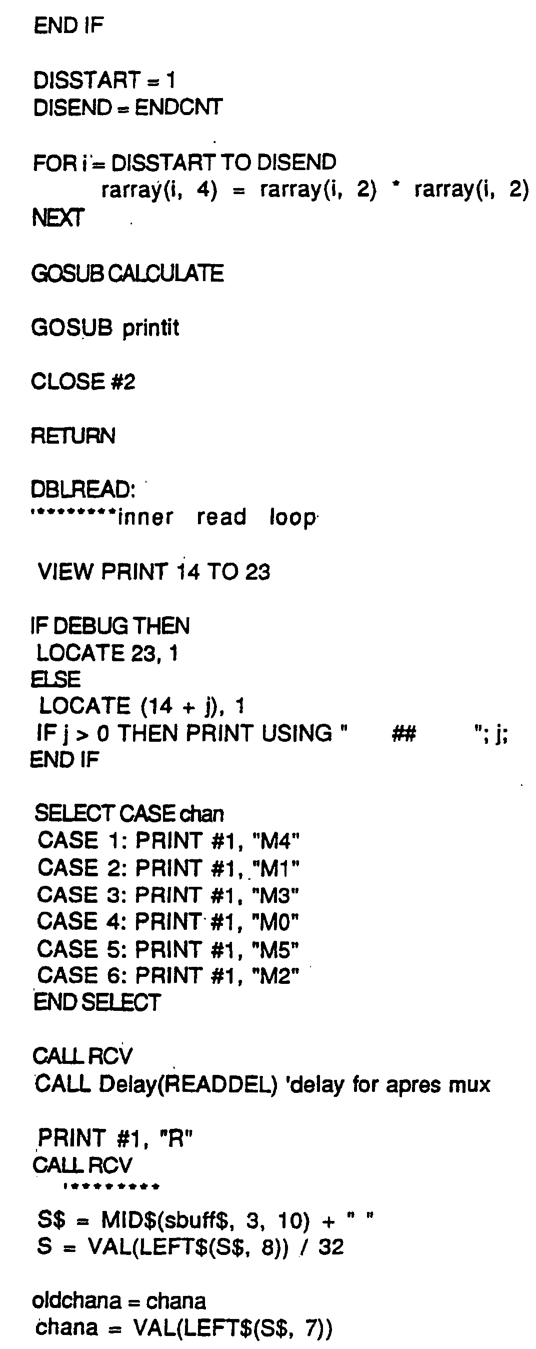

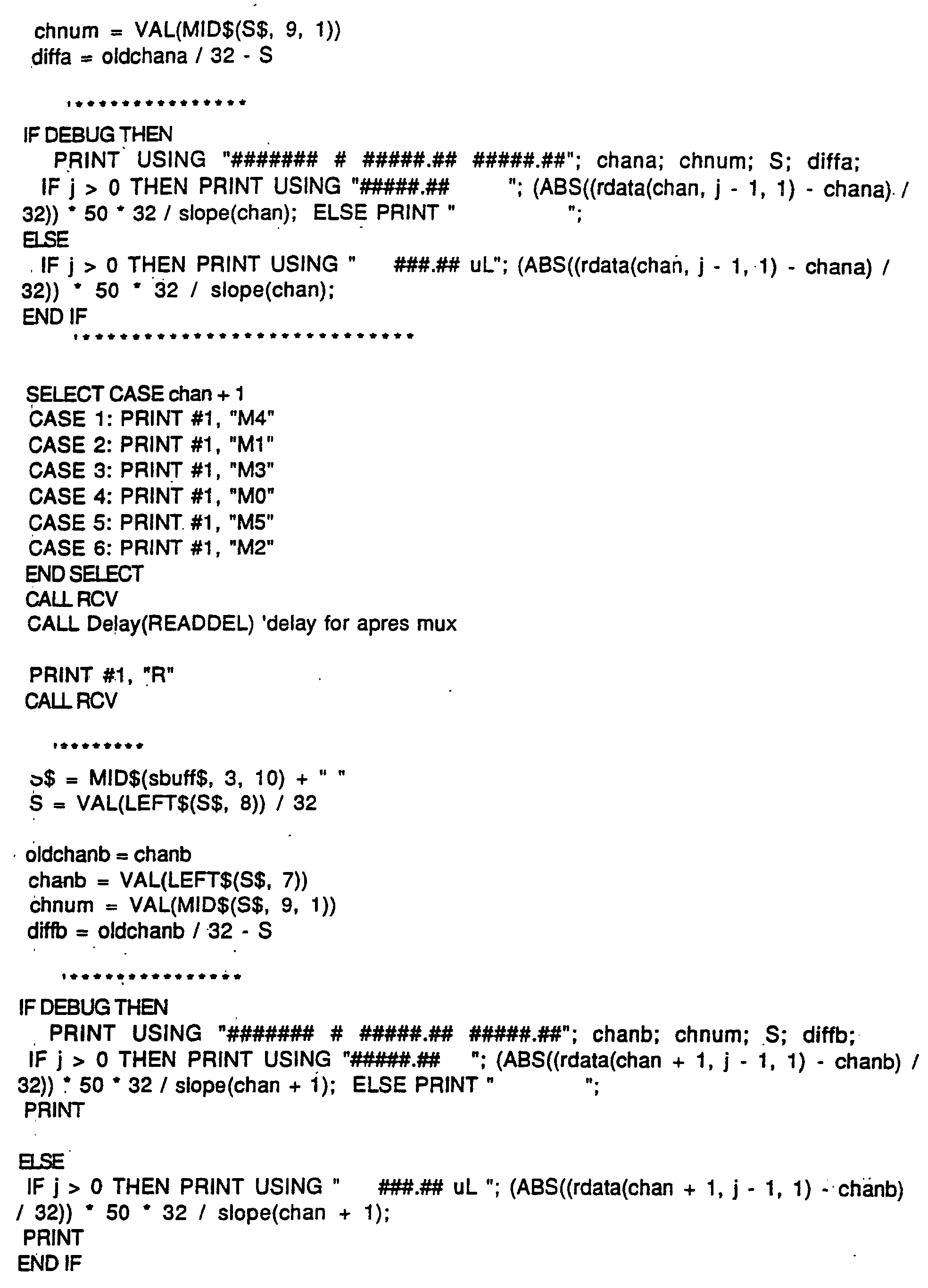

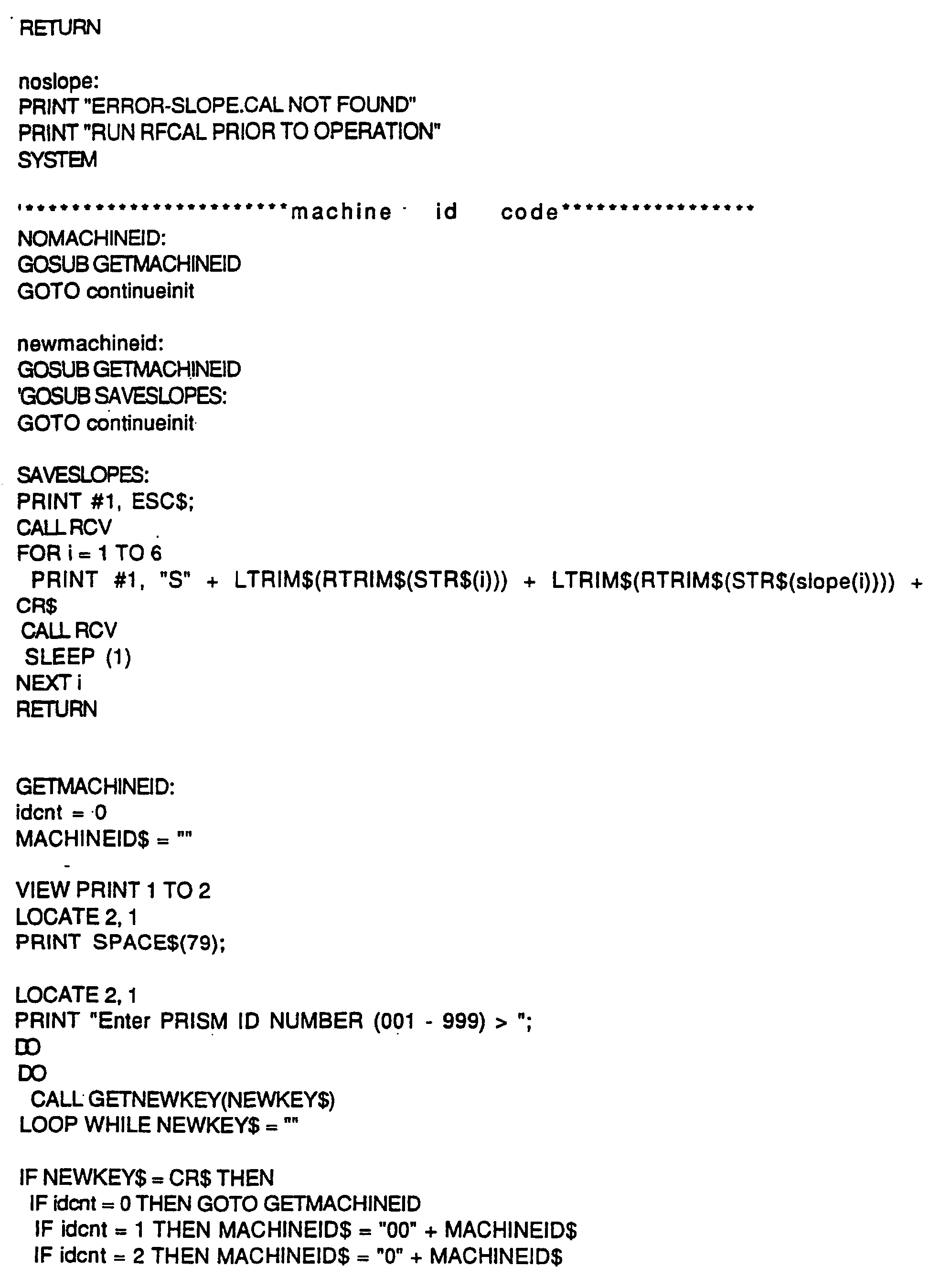

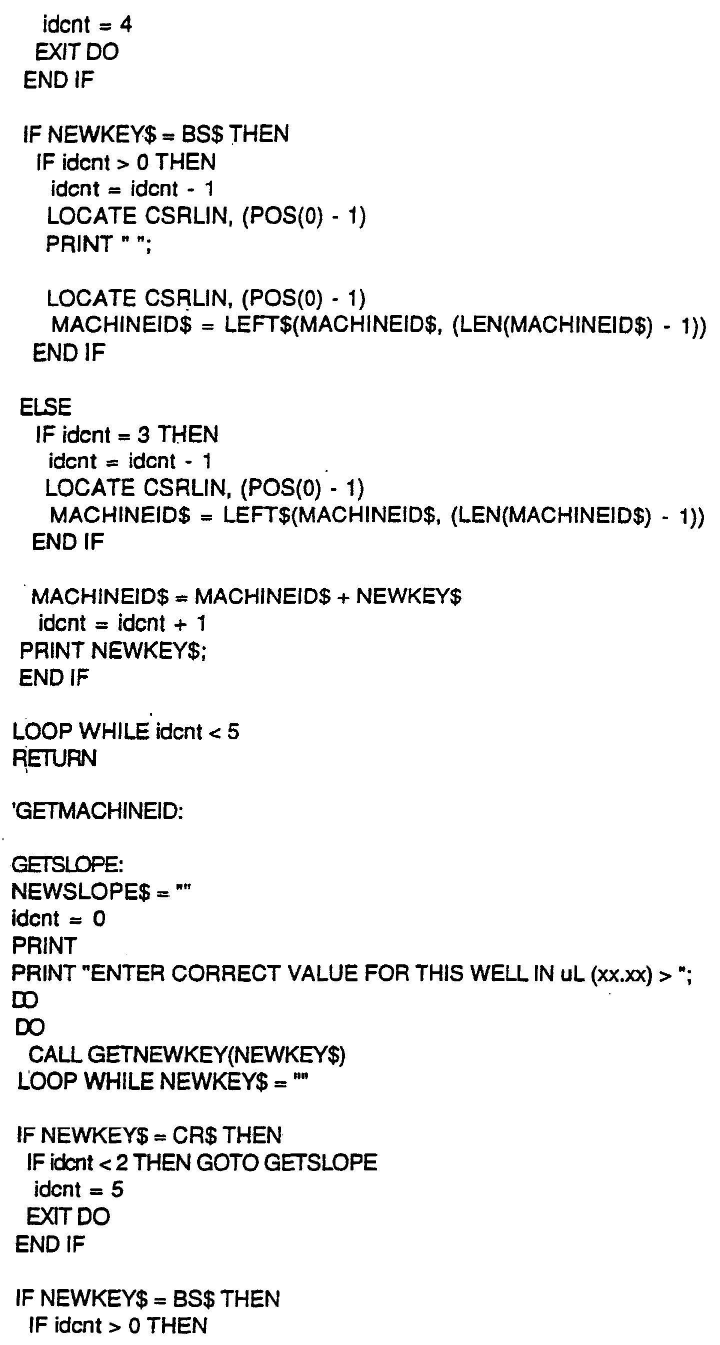

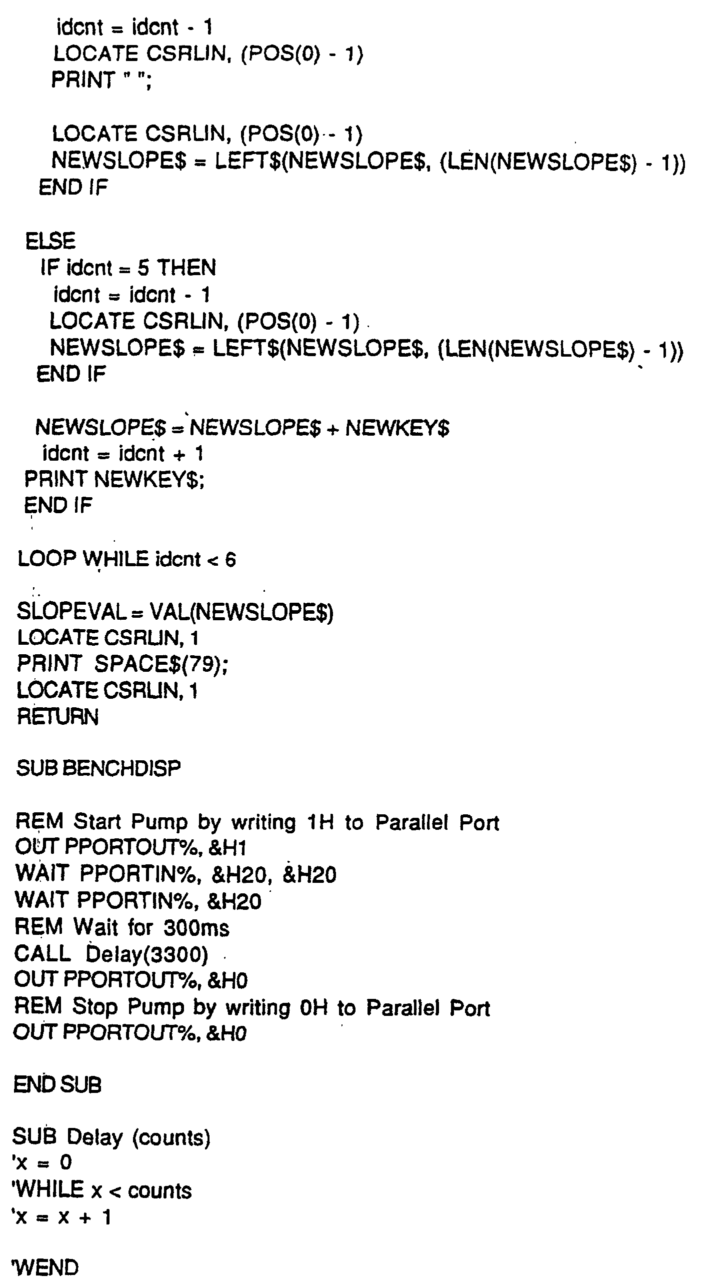

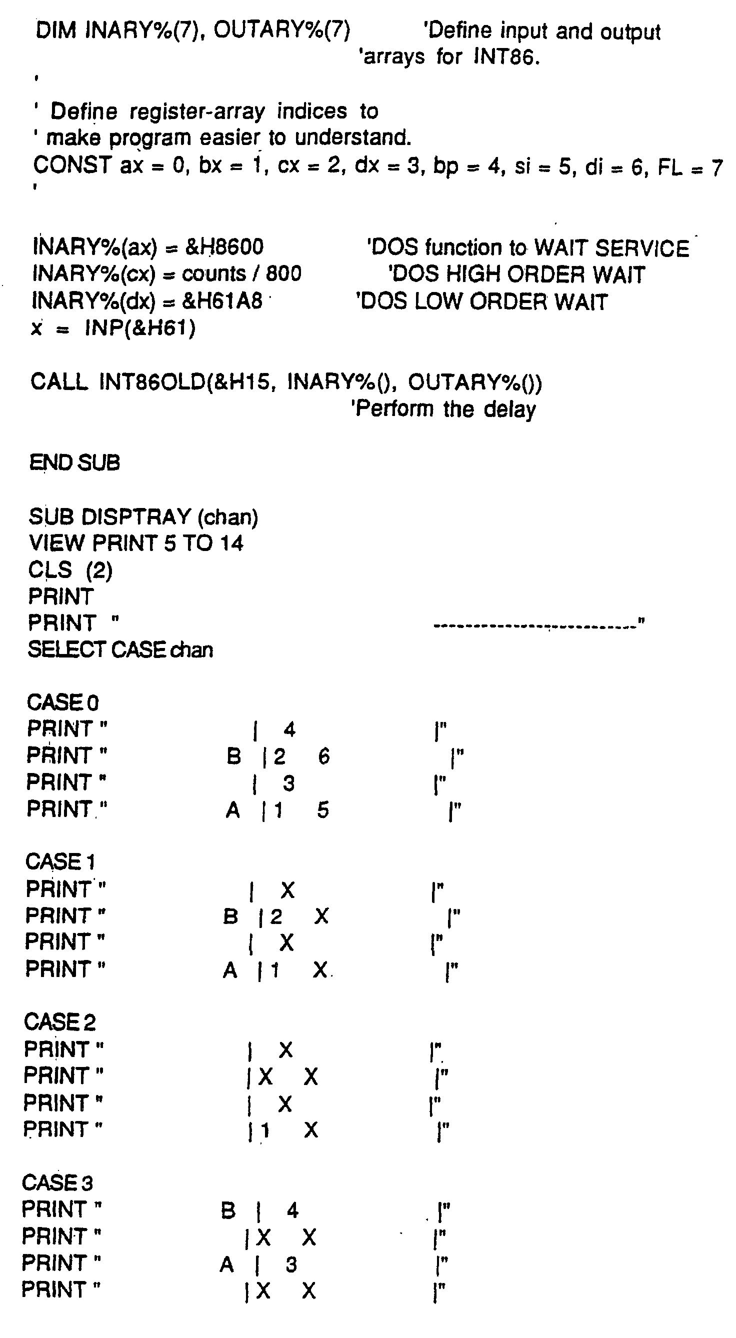

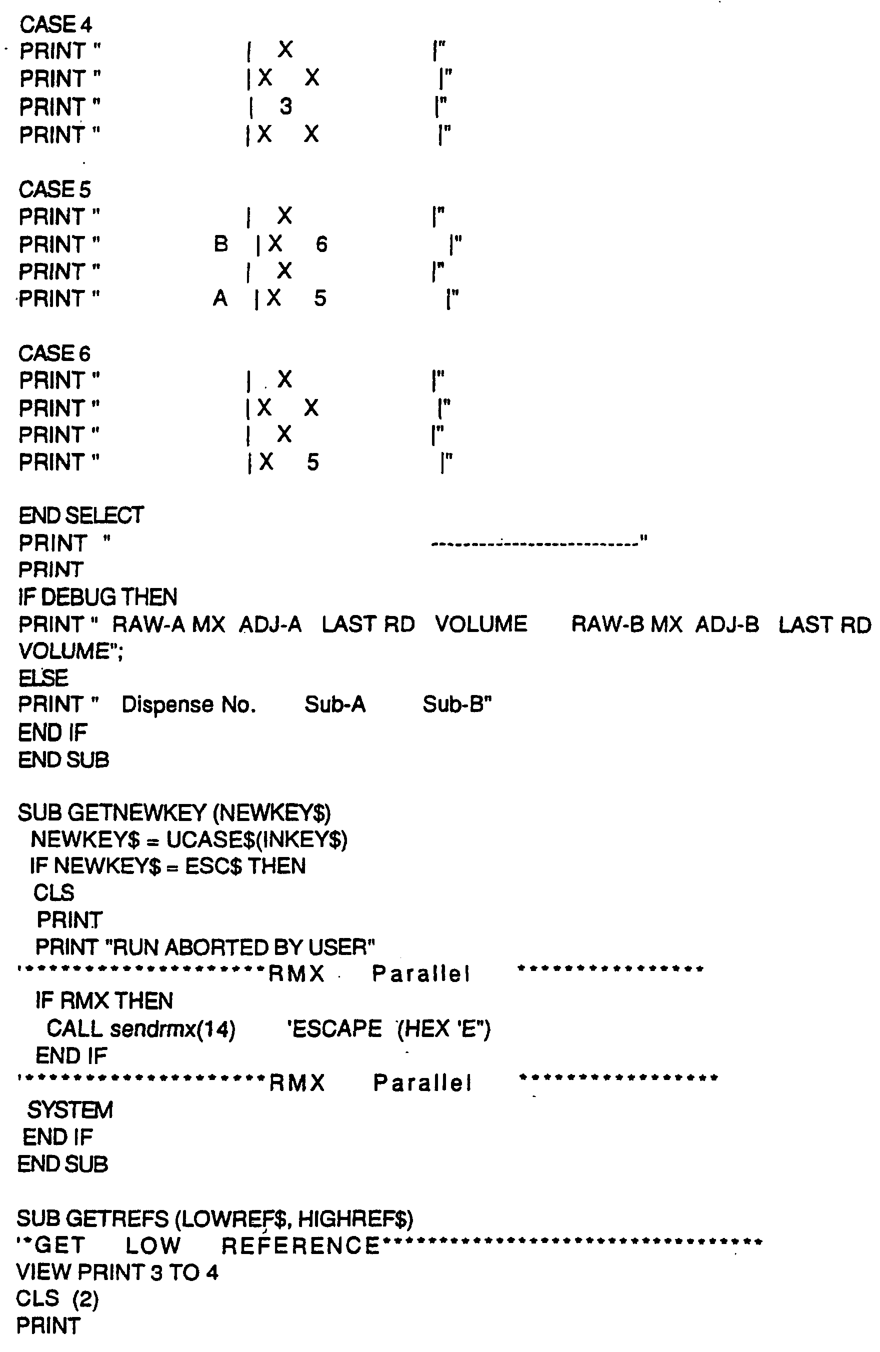

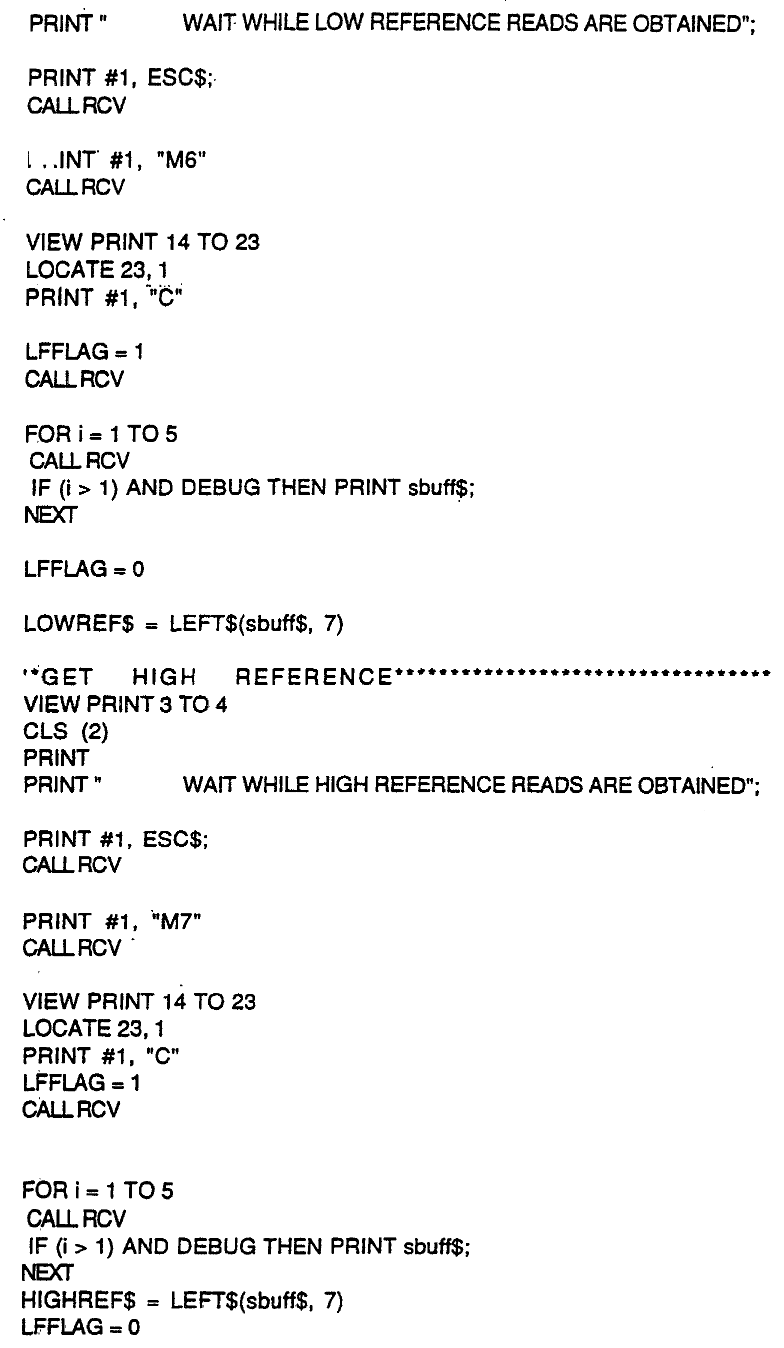

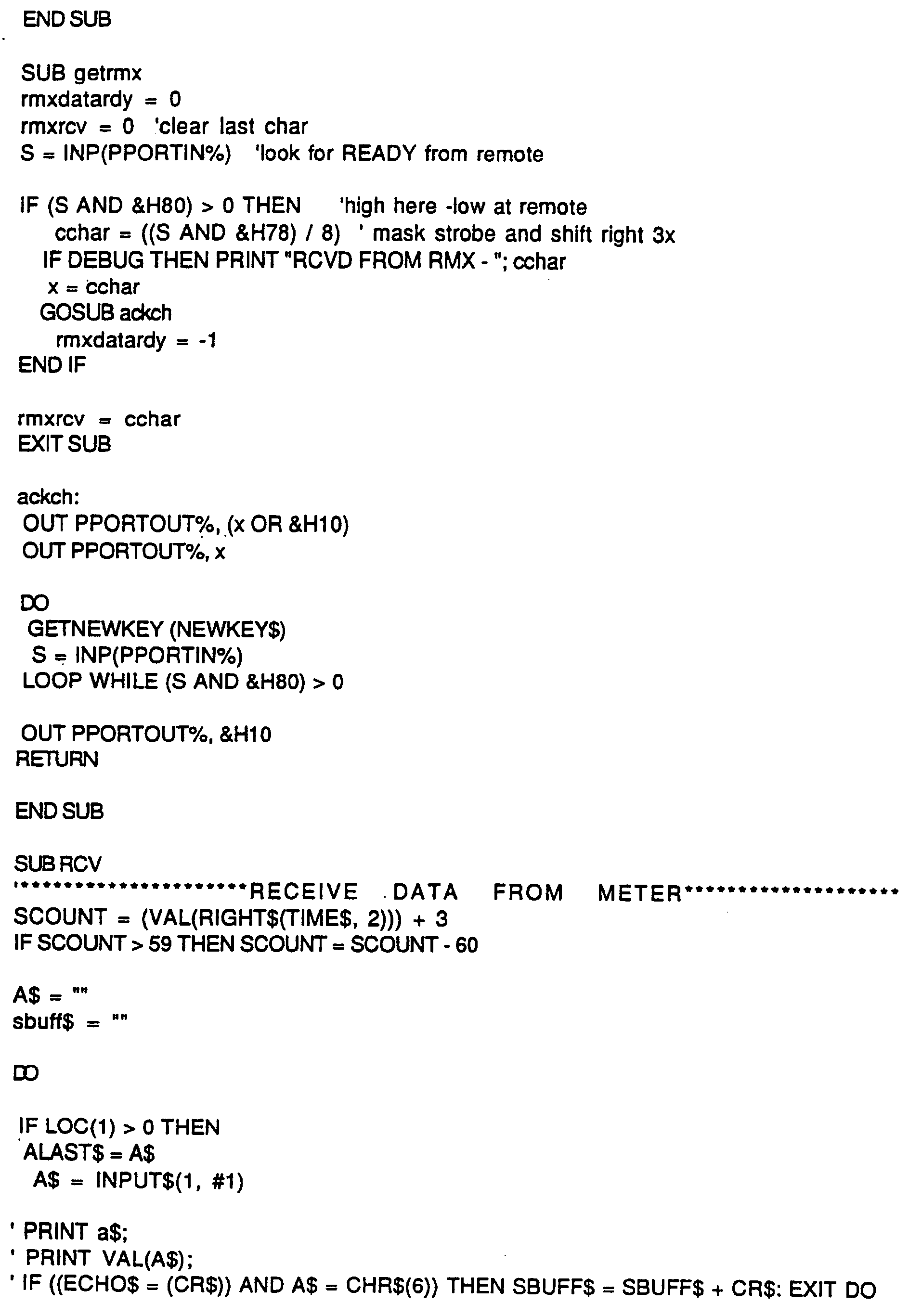

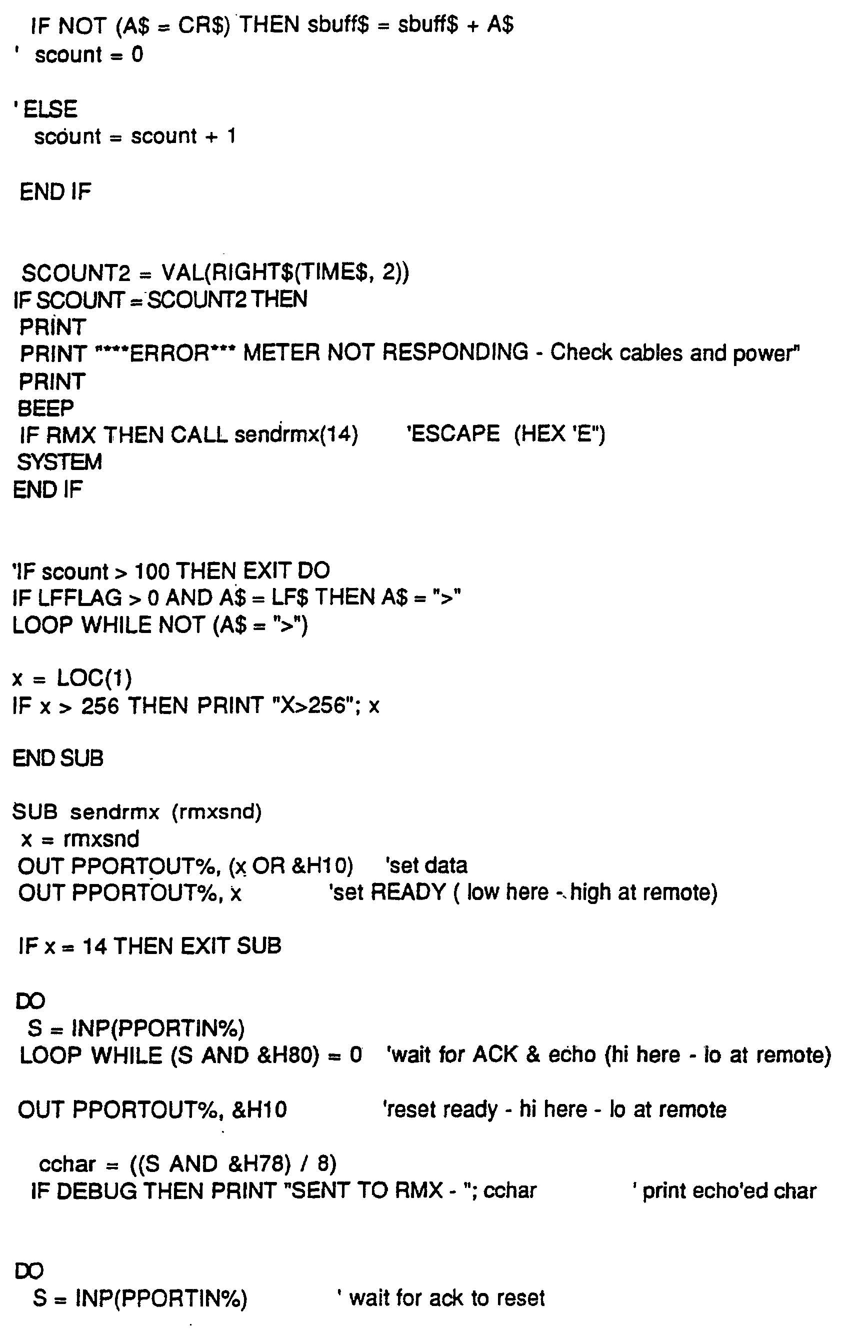

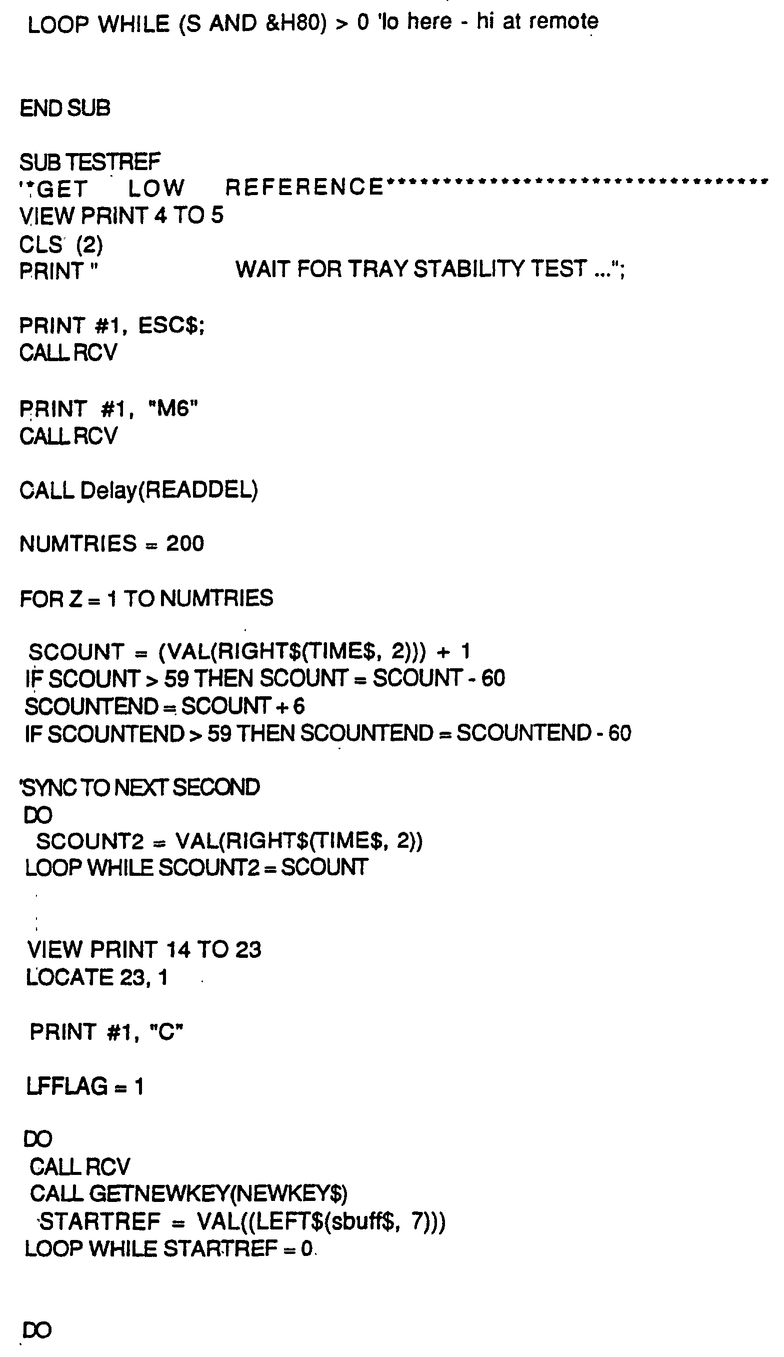

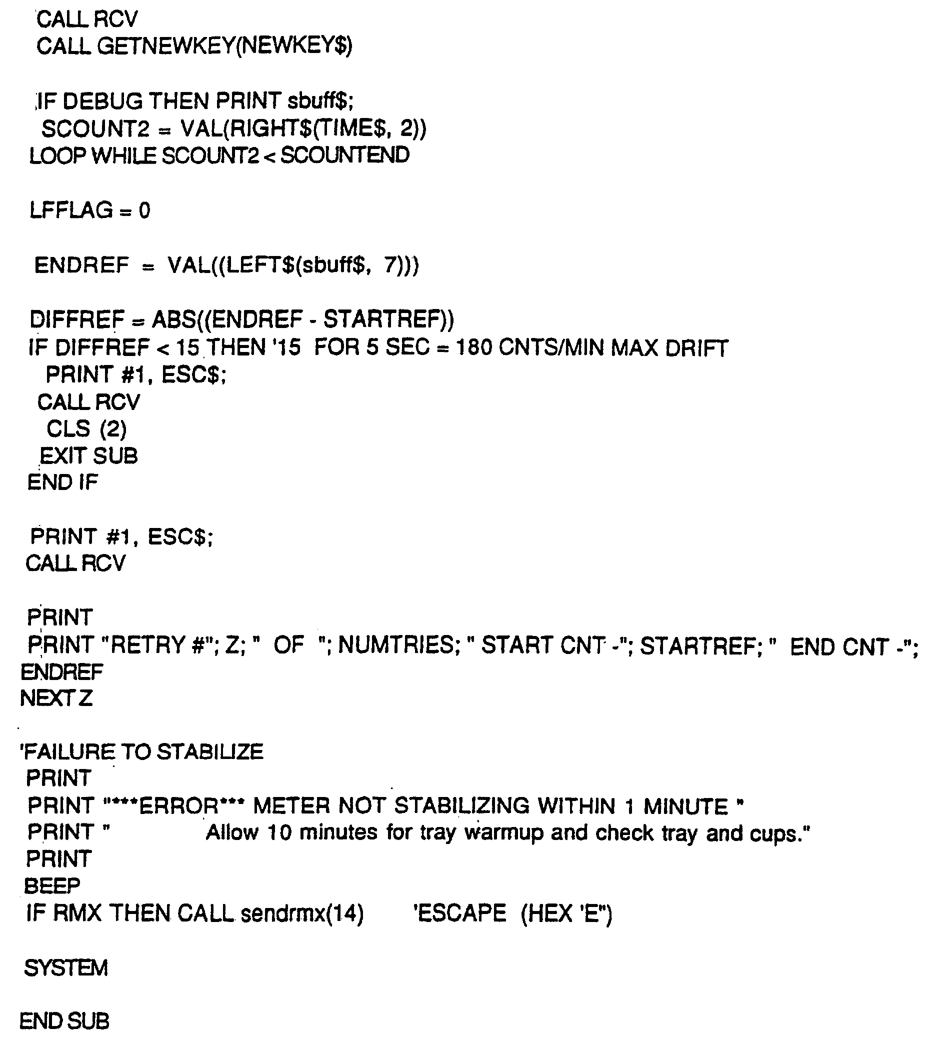

## Claims

1. An apparatus for verifying a volume of fluid comprising:
a receptacle (30) for containing fluid;
a first conductor (44) operatively associated with the receptacle (30);
a second conductor (46) operatively associated with the receptacle (30) offset from the first conductor (44);
a source (62) of a first electrical signal electrically connected with the first conductor (44); and
a monitor (86, 88) electrically connected with the second conductor (46) for detecting a second electrical signal created in the second conductor (46),
**characterized in that** the apparatus further comprises a liner (58) removably connectable with the receptacle (30).

2. The apparatus according to claim 1 further comprising:
a feedback mechanism (14) operatively connected with the monitor (86, 88) such that the feedback mechanism (14) provides feedback indicative of the second electrical signal.

3. The apparatus according to claims 1 or 2 further comprising:
a third conductor (48, 50) electrically connected with at least one of the first conductor (44) and the second conductor (46) to electromagnetically shield the at least one of the first conductor (44) and the second conductor (46).

4. The apparatus according to claim 3 further comprising:
an electrical insulator electrically (52) disposed between the third conductor (48, 50) and the at least one of the first conductor (44) and the second conductor (46).

5. The apparatus according to one or more of claims 1-4 further comprising:
a computer electrically (96) connected with at least one of the first conductor (44) and the second conductor (46).

6. The apparatus according to one or more of claims 1-5, wherein the first conductor (44) is operatively associated with the receptacle (30) such that the first conductor (44) does not contact the volume of the fluid, and wherein
the second conductor (46) is operatively associated with the receptacle (30) and offset from the first conductor (44) such that the second conductor (46) does not contact the volume of the fluid.

7. A method for operating the apparatus according to one or more of claims 1-6, the method comprising the steps of:
(a) positioning the receptacle (30) adjacent a nozzle such that fluid dispensed from the nozzle enters the receptacle (30);
(b) applying the first electrical signal to the first conductor (44); and
(c) monitoring the second electrical signal created in the second conductor (46) responsive to the first electrical signal.

8. The method of claim 7 further comprising the steps of:
(d) predetermining a condition indicative of a desired volume of fluid, and
(e) comparing the second electrical signal with the condition to determine if the desired volume of fluid were in the receptacle (30).

9. The method of claim 7 wherein the monitoring step (c) comprises
monitoring at least one of an amplitude of and a voltage associated with the second electrical signal.

10. A method operating the apparatus according to one or more of claims 1-5, the method comprising the steps of:
(a) placing the volume of fluid within the receptacle (30),
(b) positioning the first conductor (44) adjacent the receptacle (30) such that the first conductor (44) does not contact the volume of fluid;
(c) positioning the second conductor (46) adjacent the receptacle (30) such that the second conductor (46) does not contact the volume of fluid or the first conductor (44);
(d) applying the first electrical signal to the first conductor (44); and
(e) monitoring the second electrical signal generated in the second conductor (46) responsive to the first electrical signal to verify the volume of the fluid in the receptacle (30).

## Patentansprüche

1. Ein Gerät zum Überprüfen eines Fluidvolumens, das folgendes umfaßt:
ein Gefäß (30), um das Fluid zu enthalten;
einen ersten Leiter (44), der mit dem Gefäß (30) operativ verbunden ist;
einen zweiten Leiter (46), der versetzt vom ersten Leiter (44) mit dem Gefäß (30) operativ verbunden ist;
eine Quelle (62) eines ersten elektrischen Signals, die elektrisch mit dem ersten Leiter (44) verbunden ist; und
einen Monitor (86, 88), der mit dem zweiten Leiter (46) elektrisch verbunden ist, um ein zweites elektrisches Signal zu erfassen, das im zweiten Leiter (46) erzeugt wird,
**dadurch gekennzeichnet, daß** das Gerät weiterhin eine Zwischenschicht (58) umfaßt, die wegnehmbar mit dem Gefäß (30) verbindbar ist.

2. Das Gerät nach Anspruch 1, das weiterhin folgendes umfaßt:
einen Rückkopplungsmechanismus (14), der derart operativ mit dem Monitor (86, 88) verbunden ist, daß der Rückkopplungsmechanismus (14) eine Rückkopplung bereitstellt, die das zweite elektrische Signal anzeigt.

3. Das Gerät nach den Ansprüchen 1 oder 2, das weiterhin folgendes umfaßt:
einen dritten Leiter (48, 50), der elektrisch zumindest entweder mit dem ersten Leiter (44) oder dem zweiten Leiter (46) verbunden ist, um zumindest entweder den ersten Leiter (44) oder den zweiten Leiter (46) elektromagnetisch abzuschirmen.

4. Das Gerät nach Anspruch 3, das weiterhin folgendes umfaßt:
einen elektrischen Isolator (52), der elektrisch zwischen dem dritten Leiter (48, 50) und mindestens entweder dem ersten Leiter (44) oder dem zweiten Leiter (46) angeordnet ist.

5. Das Gerät nach einem oder mehreren der Ansprüche 1-4, das weiterhin folgendes umfaßt:
einen Computer (96), der elektrisch mit zumindest entweder dem ersten Leiter (44) oder dem zweiten Leiter (46) verbunden ist.

6. Das Gerät nach einem oder mehreren der Ansprüche 1-5, worin der erste Leiter (44) derart operativ mit dem Gefäß (30) verbunden ist, daß der erste Leiter (44) das Volumen des Fluids nicht berührt, und worin
der zweite Leiter (46) operativ mit dem Gefäß (30) verbunden ist und vom ersten Leiter (44) derart versetzt liegt, daß der zweite Leiter (46) das Volumen des Fluids nicht berührt.

7. Ein Verfahren zum Betreiben des Geräts nach einem oder mehreren der Ansprüche 1-6, wobei das Verfahren folgende Schritte umfaßt:
(a) das Positionieren des Gefäßes (30) angrenzend an einer Düse, so daß das von der Düse ausgegebene Fluid in das Gefäß (30) dringt;
(b) das Anlegen des ersten elektrischen Signals am ersten Leiter (44); und
(c) das Überwachen des zweiten elektrischen Signals, das im zweiten Leiter (46) erzeugt wird, und zwar als Reaktion auf das erste elektrische Signal.

8. Das Verfahren nach Anspruch 7, das weiterhin folgende Schritte umfaßt:
(d) das Vorbestimmen einer Bedingung, die ein gewünschtes Fluidvolumen anzeigt, und
(e) das Vergleichen des zweiten elektrischen Signals mit der Bedingung, um zu bestimmen, ob das gewünschte Fluidvolumen im Gefäß (30) war.

9. Das Verfahren nach Anspruch 7, worin der Überwachungsschritt (c) folgendes umfaßt:
das Überwachen von zumindest entweder einer Amplitude des zweiten elektrischen Signals oder einer damit verknüpften Spannung.

10. Ein Verfahren, das das Gerät nach einem oder mehreren der Ansprüche 1-5 betreibt, wobei das Verfahren folgende Schritte umfaßt:
(a) das Eingeben des Fluidvolumens in das Gefäß (30),
(b) das Positionieren des ersten Leiters (44) angrenzend an das Gefäß (30), und zwar derart, daß der erste Leiter (44) das Volumen des Fluids nicht berührt;
(c) das Positionieren des zweiten Leiters (46) angrenzend an das Gefäß (30), und zwar derart, daß der zweite Leiter (46) das Volumen des Fluids nicht berührt;
(d) das Anlegen des ersten elektrischen Signals am ersten Leiter (44); und
(e) das Überwachen des im zweiten Leiter (46) erzeugten zweiten elektrischen Signals als Reaktion auf das erste elektrische Signal, um das Fluidvolumen im Gefäß (30) zu überprüfen.

## Revendications

1. Appareil de vérification d'un volume de fluide, comprenant :
un réceptacle (30) destiné à contenir un fluide,
un premier conducteur (44) associé pendant le fonctionnement au réceptacle (30),
un second conducteur (46) associé pendant le fonctionnement au réceptacle (30) et décalé par rapport au premier conducteur (44),
une source (62) d'un premier signal électrique connecté électriquement au premier conducteur (44), et
un organe de contrôle (86, 88) connecté électriquement au second conducteur (46) afin qu'il détecte un second signal électrique créé dans le second conducteur (46),
**caractérisé en ce que** l'appareil comporte en outre une doublure (58) qui peut être raccordée de façon amovible au réceptacle (30).

2. Appareil selon la revendication 1, comprenant en outre :
un mécanisme à réaction (14) raccordé pendant le fonctionnement à l'organe de contrôle (86, 88) afin que le mécanisme à réaction (14) donne une réaction représentative du second signal électrique.

3. Appareil selon la revendication 1 ou 2, comprenant en outre :
un troisième conducteur (48, 50) connecté électriquement à au moins l'un des premier (44) et second (46) conducteurs pour assurer la protection électromagnétique d'au moins l'un des premier (44) et second (46) conducteurs.

4. Appareil selon la revendication 3, comprenant en outre :
un isolateur électrique (52) disposé entre le troisième conducteur (48, 50) et au moins l'un des premier (44) et second (46) conducteurs.

5. Appareil selon une ou plusieurs des revendications 1 à 4, comprenant en outre :
un calculateur (96) connecté électriquement à l'un au moins des premier (44) et second (46) conducteurs.

6. Appareil selon une ou plusieurs des revendications 1 à 5, dans lequel le premier conducteur (44) est associé pendant le fonctionnement au réceptacle (30) afin que le premier conducteur (44) ne soit pas au contact du volume de fluide, et dans lequel
le second conducteur (46) est associé pendant le fonctionnement au réceptacle (30) et est décalé par rapport au premier conducteur (44) si bien que le second conducteur (46) n'est pas au contact du volume de fluide.

7. Procédé de mise en oeuvre de l'appareil selon l'une ou plusieurs des revendications 1 à 6, le procédé comprenant les étapes suivantes :
(a) le positionnement du réceptacle (30) près d'une buse afin qu'un fluide à distribuer par la buse pénètre dans le réceptacle (30),
(b) l'application du premier signal électrique au premier conducteur (44), et
(c) le contrôle du second signal électrique créé dans le second conducteur (46) en fonction du premier signal électrique.

8. Procédé selon la revendication 7, comprenant en outre les étapes suivantes :
(d) la détermination au préalable d'une condition représentative d'un volume voulu de fluide, et
(e) la comparaison du second signal électrique à la condition pour 1a détermination du fait que le volume voulu de fluide se trouvait dans le réceptacle (30).

9. Procédé selon la revendication 5, dans lequel l'étape de contrôle (c) comprend
le contrôle d'au moins une amplitude ou une tension associée au second signal électrique.

10. Procédé de mise en oeuvre de l'appareil selon l'une ou plusieurs des revendications 1 à 5, le procédé comprenant les étapes suivantes :
(a) la disposition du volume de fluide dans le réceptacle (30),
(b) le positionnement du premier conducteur (44) près du réceptacle (30) afin que le premier conducteur (44) ne soit pas au contact du volume de fluide,
(c) le positionnement du second conducteur (46) près du réceptacle (30) afin que le second conducteur (46) ne soit pas au contact du volume de fluide ou du premier conducteur (44),
(d) l'application du premier signal électrique au premier conducteur (44), et
(e) le contrôle du second signal électrique créé dans le second conducteur (46) en fonction du premier signal électrique pour la vérification du volume de fluide dans le réceptacle (30).
